# EUROPEAN PATENT SPECIFICATION

(11) **EP 3 922 093 B1**
(45) Date of publication and mention of the grant of the patent: **07.02.2024**
(21) Application number: 21190011.3
(22) Date of filing: 21.10.2019
(51) Int. Cl.: A01D 34/82, A01D 34/66, A01D 67/04, B62D 49/08, B66F 3/08, E02F 9/18

(54) **WORK VEHICLE WITH DETACHABLE BALANCING WEIGHT**
NUTZFAHRZEUG MIT ABNEHMBAREM AUSGLEICHSGEWICHT
ENGIN DE TRAVAIL AVEC MASSES D'ÉQUILIBRAGE DÉTACHABLES

(30) Priority: 24.10.2018 JP 2018199972; 13.03.2019 JP 2019046289; 22.03.2019 JP 2019055484
(43) Date of publication of application: 15.12.2021
(62) Divisional of application: 19204229.9
(73) Proprietor: Kubota Corporation, Osaka-shi, Osaka 556-8601 (JP)
(72) Inventor: TASHIMA, Shinya, SAKAI-SHI, 5900823 (JP); AKAI, Yuto, SAKAI-SHI, 5900823 (JP); KAGO, Tatsuki, SAKAI-SHI, 5900823 (JP); YAMASHITA, Nobuyuki, SAKAI-SHI, 5900823 (JP); KUMASHIRO, Takashi, SAKAI-SHI, 5900823 (JP); HABU, Kentaro, SAKAI-SHI, 5900823 (JP); KASETANI, Takahiro, SAKAI-SHI, 5900823 (JP); HIRAI, Ryota, SAKAI-SHI, 5900823 (JP); AKITA, Masayuki, SAKAI-SHI, 5900823 (JP); SATO, Seiya, SAKAI-SHI, 5900823 (JP); TONOYA, Yoshihisa, SAKAI-SHI, 5900823 (JP); YAMAMOTO, Tomohisa, SAKAI-SHI, 5900823 (JP); KAWAMOTO, Ryusuke, SAKAI-SHI, 5900823 (JP); AMAGATA, Nobuhiko, SAKAI-SHI, 5900823 (JP)
(74) Representative: Cabinet Beau de Loménie

(56) References cited:
- EP-A1- 3 476 643
- DE-A1- 2 423 400
- DE-U1- 7 813 510
- GB-A- 2 053 649
- US-A- 3 490 787
- US-A- 4 232 883
- US-A1- 2012 007 349

## Description

### TECHNICAL FIELD

The present invention relates to a work vehicle such as a riding grass mower machine, etc.

### BACKGROUND ART

### [Background Art 1]

Conventionally, a work vehicle is known from e.g. JP 2014-205368 A. The work vehicle disclosed in JP 2014-205368 A includes a bracket (" a weight support (72)" in this document) provided at a front end portion of a machine body frame ("a front frame (3)" in this document), and a balance weight ("a weight member (73)" in this document) detachably attached to the bracket.

### [Background Art 2]

There is known an example of the riding grass mower machine of the above-noted type which includes a jacking device capable of lifting up a vehicle body front end side. By lifting up a grass mower device by lifting up the vehicle body front end side, maintenance of the inside of the grass mower device is made possible, with keeping the grass mower device attached to the vehicle body. More particularly, the jacking device includes a jacking body and an operational handle detachably attached to the jacking body and capable, under this attached condition, of extending/contracting the jacking body, so that lifting-up of the vehicle body front end side is possible by the jacking body under its extended state. And, the jacking body is changeable in its posture between a lowered use posture under which the body is capable of lifting up the vehicle body front end side and an elevated storage posture elevated toward the vehicle body side.

Further, as another example of this type of riding grass mower machine, one is known form e.g. JP 2004-236616 A. This riding grass mower machine includes a pivotal leg, a slidable leg and a drive unit as the jacking body and includes also an operational portion in the form of an operational handle.

### [Background Art 3]

Conventionally, another work vehicle is known from e.g. JP 2018-201383 A. The work vehicle disclosed in JP 2018-201383 A includes a driver's seat ("a driver's seat (16)" in the document), fenders that cover a traveling device ("front wheels (4)" and "rear wheels (5)" in the document) on the opposed lateral sides of the driver' seat, and handrails provided on upper face portions of the fenders which are located on the lateral sides of the driver's seat.

### SUMMARY OF THE INVENTION

### OBJECTS TO BE ACHIEVED BY INVENTION

### [Object 1]

A problem with [Background Art 1] is as follows.

In the work vehicle disclosed in JP 2014-205368 A, the balance weight is attached to the bracket, with the former projecting more forwardly than the latter. Thus, the longitudinal length of the machine body becomes longer when the balance weight is attached than when the balance weight is not attached.

In view of the above-described situation, there is a need for a work vehicle whose machine body longitudinal length does not increase even when the balance weight is attached.

### [Object 2]

A problem with [Background Art 2] is as follows.

In the riding grass mower machine described above, when the vehicle body front end side is elevated by the jacking body, in order to allow the jacking body to be supported firmly without distortion or deformation of the vehicle body side portion supporting the jacking body due to the ground contacting reaction force, special reinforcement measure will be applied to the vehicle body side portion. But, this will be costly as it requires a sturdy reinforcement member for instance.

The present invention provides a riding grass mower machine that can be obtained inexpensively while allowing jacking-up of the vehicle body front end side with the vehicle body portion supporting the jacking body firmly and allowing the jacking-up operation to be carried out speedily.

### [Object 3]

A problem with [Background Art 3] is as follows.

In the work vehicle disclosed in JP 2018-201383 A, the handrails are located to the rear side relative to the driver's seat, so it is difficult for a driver to reach the handrails when he/she gets on/off the driver's seat.

DE 78 13 510 U1 and US 4 232 883 disclose work vehicles according to the preamble of claim 1.

GB 2 053 649 discloses a ballast weight assembly for a tractor.

US 2012/007349 discloses a work vehicle with a weight system that can be quickly detached.

DE 24 23 400 discloses a ballast weight assembly for a work vehicle.

US 3 490 787 discloses a tractor counterweight assembly.

In view of the above-described situation, there is a need for a work vehicle that allows a driver to reach a handrail easily when getting/off a driver's seat.

### SOLUTIONS

A solution addressing to [Object 1] is provided by the invention as defined in claim 1.

With the above-described characterizing arrangement, since the balance weight is attached to the bracket without protruding more forwardly than the bracket, the longitudinal length of the machine body does not become longer even when the balance weight is attached.

The bracket includes a frame portion in the form of a framework as seen in a plan view, and a main body portion of the balance weight is inserted within the framework.

With the above-described characterizing arrangement, the main body portion is to be enclosed by the frame portion from the front/rear sides and left/right sides. This can reduce the possibility of inadvertent positional displacement of the main body portion in the front/rear and left/right directions, thus allowing improvement in the stability of the balance weight.

The balance weight has an outer side portion which is located on a lateral side of and outside of the frame portion when the main body portion is inserted within the framework; and the balance weight is fixed to the bracket by a fixing tool which extends through the outer side portion laterally.

With the above-described characterizing arrangement, by operating the fixing tool in a large space available outside the frame portion, the operation of fixing the balance weight to the bracket can be carried out easily. Further, as the fixing tool is located laterally of the bracket, it becomes possible to allow not only the balance weight but also the fixing tool not to protrude more forwardly than the bracket.

Preferably, there are provided a pair of left and right balance weights and the left and right balance weights are constituted of an identical member respectively.

With the above-described characterizing arrangement, through commonization of parts, it is possible to reduce the number of parts. Further, when the left and right balance weights are attached, the left/right balance of the machine body can be maintained favorably.

Further preferably, a lateral width between a left end of the left balance weight and a right end of the right balance weight is set longer than a lateral width of the machine body frame.

With the above-described characterizing arrangement, by forming the balance weights wide, it is possible to enlarge the balance weights while suppressing increase in the thickness (front/rear direction) of the balance weights.

Still further preferably, there are provided a pair of left and right steerable front wheels; and the respective balance weight is attached to the bracket without protruding to more outer side of the machine body than a turning locus of the corresponding front wheel.

With the above-described characterizing arrangement, when a turn is made at a small space, interference between the balance weight and an object present around and in front of the machine body will hardly occur.

A non claimed solution addressing to [Object 2] is as follows.

A riding grass mower machine comprises:
a grass mower device provided between front and rear wheels of a vehicle body;
a balance weight attaching portion which is provided at a front portion of the vehicle body and to which a balance weight is attached;
a jacking device including a jacking body and an operational handle detachably attached to the jacking body and capable, under an attached state, of extending/contracting the jacking body, the jacking device being capable of elevating a vehicle body front end side by the jacking body under an extended state thereof;
the jacking body being pivotally supported to the balance weight attaching portion to be posture-switchable between a lowered use posture capable of elevating the vehicle body front end side and an elevated storage posture elevated toward the vehicle body side; and
the balance weight attaching portion including a handle storage portion capable of storing the operational handle.

With the above-described characterizing configuration, when the vehicle body front end side is to be elevated (i.e. jacked up), the balance weight attaching portion which is sturdy enough to withstand the load of the balance weight supports the jacking body against the ground contacting reaction force, so that the jacking body can be supported firmly against the ground contacting reaction force and also the configuration can be formed inexpensive as no special reinforcement measure is needed.

Further, by storing the operational handle in the handle storage portion, the operational handle can be drawn out for its use from a position near the jacking body, so a jacking-up operation can be carried out speedily.

Preferably, the jacking body is supported to the balance weight attaching portion at a portion thereof which is more forwardly than a weight storage portion in which the balance weight is to be stored.

With the above-described characterizing arrangement, even when the balance weight is attached, the jacking body can be used and stored on more forward side than this balance weight, so an operation can be carried out easily.

Still preferably, the handle storage portion is included in the balance weight attaching portion at a portion thereof more rearwardly than the weight storage portion in which the balance weight is to be stored.

With the above-described characterizing arrangement, the load of the balance weight is applied more forwardly than the handle storage portion. Thus, while the operational handle can be stored in the vicinity of the jacking body, it is still possible to allow the load of the balance weight to be applied to the vehicle body in an effective manner.

Still preferably, there are provided:
a first posture maintaining mechanism switchable between an active state to maintain the jacking body under the lowered use posture by retaining a base end side portion of the jacking body to the balance weight attaching portion and a releasing state to release the retention of the base end side portion; and
a second posture maintaining mechanism switchable between an active state to maintain the jacking body under the elevated storage posture by retaining a leading end side portion of the jacking body to the balance weight attaching portion and a releasing state to release the retention of the leading end side portion.

With the above-described characterizing arrangement, when the jacking body is to be stored, the leading end side of the jacking body is retained to the balance weight attaching portion by the second posture maintaining mechanism. With this, of the jacking body, at its base end side pivotally supported to the balance weight attaching portion and its leading end side pivotally supported to the balance weight attaching portion, the jacking body is supported by the balance weight attaching portion. Thus, the jacking body can be stored in a stable manner without being swayed by e.g. traveling vibration.

A non claimed solution addressing to [Object 3] is as follows.

There are provided:
a driver's seat;
fenders covering a traveling device on opposed lateral sides of the driver's seat; and
handrails provided on upper face portions of the fenders which are located on the lateral sides of the driver's seat, the handrails being disposed more forwardly than a rear end of a seat portion of the driver's seat.

With the above-described characterizing arrangement, the handrails are located more forwardly relative to the driver's seat. With this, a driver, when getting on/off the driver's seat, can easily reach the handrails.

Preferably, an upper end of each handrail is located at a height positon higher than a lower end of the seat portion.

With the above-described characterizing arrangement, as the handrail is located at a relatively high position relative to the seat portion, the driver, as seated at the driver's seat, can readily reach the handrail.

Still preferably, at an upper face portion of a portion of the fender located on the lateral side of the driver's seat, there is provided a lever guide for the operational lever; and a front/rear range of the handrail is overlapped with a front/rear range of the lever guide.

With the above-described characterizing arrangement, the handrail is located near the lever guide. With this, the driver can remove his/her hand from the operational lever and can reach the handrail directly.

Still preferably, the handrail is disposed on more laterally outer side than the lever guide.

With the above-described characterizing arrangement, the driver will not be interfered by the handrail during operating the operational lever.

Still preferably, under the fenders, a fuel tank is provided: an oil outlet of the fuel tank is exposed to the outside via an opening formed in an upper face portion of the fender; and the handrail is disposed more forwardly than the oil outlet.

With the above-described characterizing arrangement, the handrail will hardly be an obstacle in the course of an oil filling operation and at the same time the handrail can be positioned with an offset to the front side relative to the driver's seat.

Still preferably, inside the fender, there is provided a support frame for supporting the handrail.

With the above-described characterizing arrangement, the handrail can be supported firmly so that fender will not be deformed by an external force applied to the handrail.

Still preferably, under the fenders, a fuel tank is provided; the support frame is provided along the fuel tank; and a portion of the fuel tank extending along the support frame is formed concave toward the inside of the fuel tank.

With the above-described characterizing arrangement, by fitting the support frame into the concave portion of the fuel tank formed concave toward the inside of this fuel tank, the support frame can be disposed easily at the gap or space formed between the fender and the fuel tank.

### BRIEF DESCRIPTION OF THE DRAWINGS

Fig. 1 is a view showing a first embodiment (same is true for drawings up to Fig. 7) which is a left side view of a riding grass mower machine,
Fig. 2 is a plan view showing the riding grass mower machine,
Fig. 3 is a front view showing a condition in which a balance weight is attached to a bracket,
Fig. 4 is a plan view showing the condition in which the balance weight is attached to the bracket,
Fig. 5 is a plan view showing relation between a turning locus of a front wheel and the balance weight,
Fig. 6 is a front view showing a condition in which a balance weight is attached to a bracket relating to a further embodiment,
Fig. 7 is a plan view showing the condition in which the balance weight is attached to the bracket relating to the further embodiment,
Fig. 8 is a view showing a second non-claimed example (same is true for drawings up to Fig. 19) which is a left side view showing an entire riding grass mower machine,
Fig. 9 is a plan view showing the riding grass mower machine entirely,
Fig. 10 is an explanatory view showing a use condition of a jacking device,
Fig. 11 is a plan view of a balance weight attaching portion under a condition in which a balance weight is attached, a jacking body is set to an elevated storage posture and an operational handle is stored,
Fig. 12 is a bottom view in section of the balance weight attaching portion under the condition in which the balance weight is attached, the jacking body is set to the elevated storage posture and the operational handle is stored,
Fig. 13 is a front view showing the jacking body under the elevated storage posture and the operational handle under the storage posture,
Fig. 14 is a front view showing the jacking body under a lowered use posture and the operational handle attached to the jacking body,
Fig. 15 is a perspective view showing the balance weight, the operational handle, and the balance weight attaching portion,
Fig. 16 is a plan view showing an operational device for a grass mower device and a grass collecting container,
Fig. 17 is a side view showing the operational device for the grass mower device and the grass collecting container,
Fig. 18 is a perspective view showing the operational lever, a first support member, a second support member, a lock member, etc.,
Fig. 19 is a vertical sectional view showing an attachment under its attached condition,
Fig. 20 is a view showing a third embodiment (same is true for drawings up to Fig. 28), which is a left side view of a riding grass mower machine,
Fig. 21 is a front view showing the riding grass mower machine,
Fig. 22 is a left side view in section showing a left handrail and its surrounding arrangement,
Fig. 23 is a right side view in section showing a right handrail and its surrounding arrangement,
Fig. 24 is a rear view in section showing the left handrail and its surrounding arrangement,
Fig. 25 is a rear view in section showing the right handrail and its surrounding arrangement,
Fig. 26 is a left side view showing a condition in which a bottom plate of the machine body side is located at a closing position,
Fig. 27 is a left side view showing a condition in which the bottom plate of the machine body side is located at an opening position, and
Fig. 28 is a right side view showing a handrail relating to a further embodiment.

### EMBODIMENTS

### [First Embodiment]

Next, an embodiment (first embodiment) of the present invention will be explained with reference to the accompanying drawings.

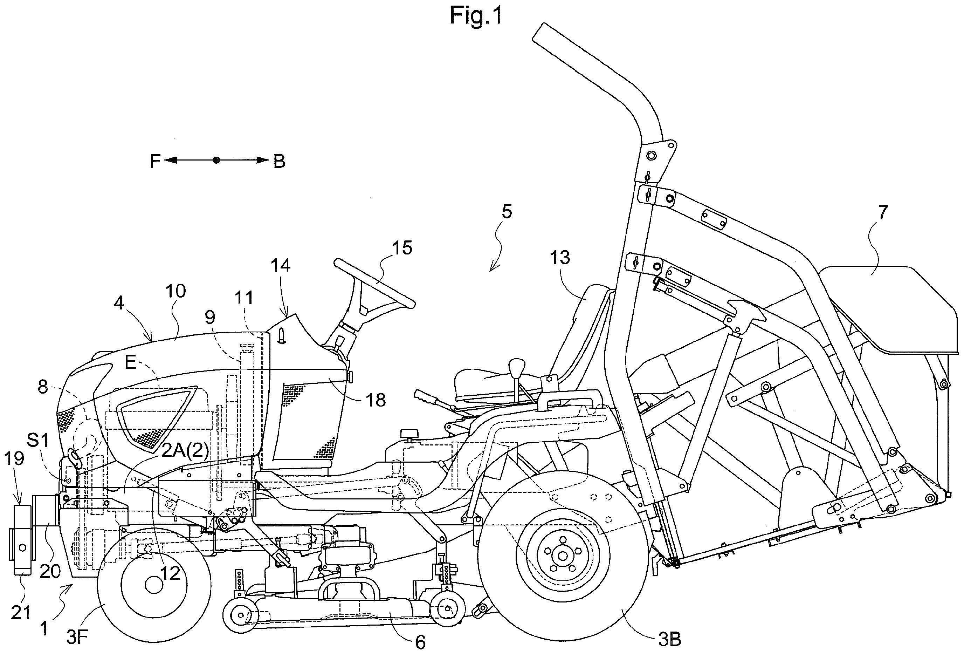

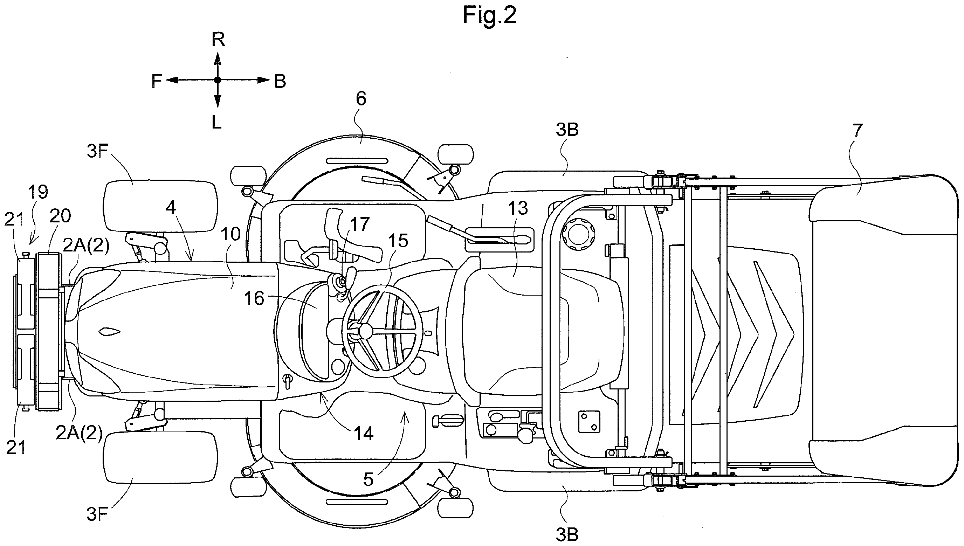

Incidentally, in the following discussion, respecting a vehicle body of a riding grass mower machine, the direction of arrow F is defined as "vehicle body front side" (see Fig. 1 and Fig. 2), the direction of arrow B is defined as "vehicle body rear side" (see Fig. 1 and Fig. 2), the direction of arrow L is defined as "vehicle body left side" (see Fig. 2) and the direction of arrow R is defined as "vehicle body right side" (see Fig. 2), respectively.

### [General Configuration of Riding Grass Mower Machine in First Embodiment]

Fig. 1 and Fig. 2 show a riding grass mower machine (corresponding to a "work vehicle" relating to the present invention). This riding grass mower machine includes a traveling machine body 1. The traveling machine body 1 includes a machine body frame 2, a pair of left and right steerable front wheels 3F, and a pair of left and right drivable rear wheels 3B. The machine body frame 2 includes a pair of left and right main frames 2A extending along a machine body front/rear direction. At a front portion of the traveling machine body 1, an engine section 4 is provided. Rearwardly of the engine section 4, a driving section 5 is provided. Under the traveling machine body 1 and between the front wheels 3F and the rear wheels 3B, a mower 6 is provided. At a rear portion of the traveling machine body 1, there is supported a grass collecting container 7 for collecting cut grass pieces from the mower 6.

The engine section 4 includes an engine E, a muffler 8 for discharging exhaust gas of the engine E, a radiator 9 for discharging heat of engine cooling water, and a hood 10 for housing the engine E, etc. The engine E is mounted at a front portion of the machine body frame 2. In an outer circumferential portion of the radiator 9, there is provided a frame 11 in the form of a plate for sealing a gap present around the radiator 9. The hood 10 is configured to be pivotally opened/closed about a front pivot S1. A damper 12 is provided for pivotally urging the hood 10 to the opening side.

The driving section 5 includes a driver's seat 13 and a control tower 14. In the control tower 14, there are provided a steering wheel 15, a meter panel 16 , a key switch 17 for commanding start of the engine E, a panel 18 for covering e.g. a post (not shown) supporting the steering wheel 15.

### [Balance Weight of First Embodiment]

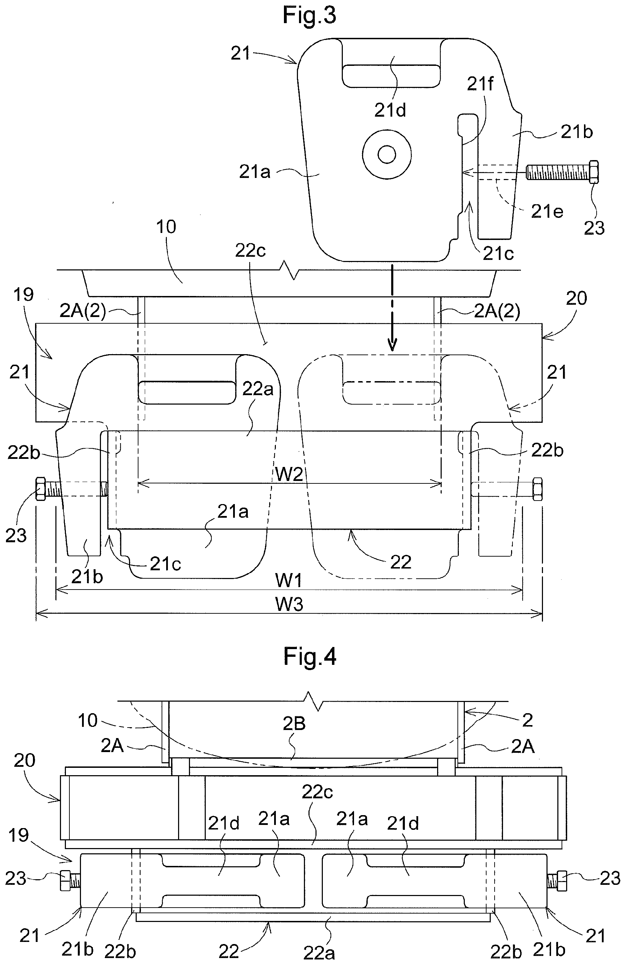

As shown in Fig. 3 and Fig. 4, at a front end portion of the traveling machine body 1, there is provided a weight unit 19. This weight unit 19 includes a bracket 20 provided at a front end portion of the machine body frame 2, and left and right balance weights 21 detachably attached to the bracket 20.

The bracket 20 is fixed to a front face portion of a transverse frame 2B extending between and across front end portions of the left and right main frames 2A of the machine body frame 2. The bracket 20 includes a frame portion 22 in the form of a framework as seen in a plan view. The frame portion 22 includes a front plate 22a, left and right side plates 22b and a rear plate 22c.

The left and right balance weights 21 are constituted of an identical member respectively and are arranged in left/right symmetry. A lateral width W1 between the left end of the left balance weight 21 and the right end of the right balance weight 21 is set wider than a lateral width of the machine body frame 2 (specifically, the lateral width between the left end of the left main frame 2A and the right end of the right main frame 2A) W2 and is also set narrower than a lateral width W3 of the bracket 20. And, the left and right balance weights 21 are attached to the bracket 20, with the balance weights 21 not protruding to more front side than the front face of the bracket 20 (the front plate 22a).

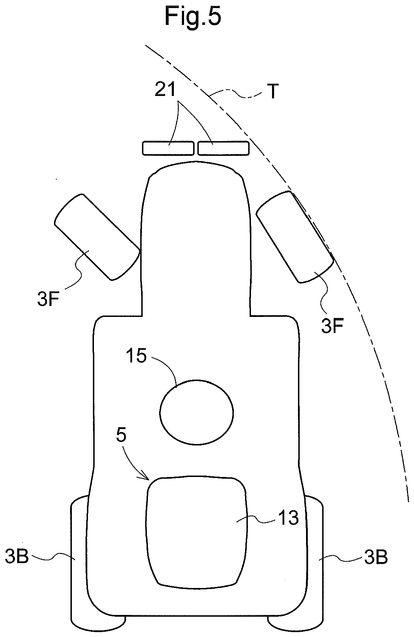

As shown in Fig. 5, the left and right balance weights 21 are attached to the bracket 20 in such a manner as not to protrude to the outer side of the machine body than a turning locus T of the front wheel 3F. For instance, the arrangement is preferably such that when the front wheels 3F are steered maximally, the left and right balance weights 21 do not protrude to the machine body outer side beyond the turning locus T of the front wheels 3F. Incidentally, Fig. 5 shows as an example a relationship between the turning locus T when the front wheels 3F are steered to the left side and the balance weights 21. It is understood that the relationship between the turning locus T and the balance weights 21 will remain the same or similarly as/to that shown in Fig. 5, when the front wheels 3F are steered to the right side.

As shown in Fig. 3 and Fig. 4, each balance weight 21 includes a main body portion 21a and an outer side portion 21b. Between the main body portion 21a and the outer side portion 21b of the balance weight 21, there is formed a groove portion 21c extending along the vertical direction. The main body portion 21a is inserted within, i.e. into the inside of, the framework of the frame portion 22. More particularly, the main body portion 21a is enclosed from the front and rear sides as well as the left and right sides by the rear plate 22c and the left and right side plates 22b. And, the balance weight 21 is hooked from the outer side to the side plates 22b with the main body portion 21a being inserted to the inside of the framework of the frame portion 22.

The outer side portion 21b is located laterally adjacent the frame portion 22 on the outside of this frame portion 22 with the main body portion 21a being inserted within the framework of the frame portion 22. The balance weight 21 is fixed to the bracket with a bolt 23 (corresponding to a "fixing tool" in this invention) that extends through the outer side portion 21b. And, this outer side portion 21b defines a bolt hole 21e extending along the lateral direction for allowing insertion and extension therethrough of the bolt 23.

At a portion of the main body portion 21a on the side of the groove portion 21c, there is formed a protrusion 21f which protrudes toward the outer side portion 21b. Under the condition where the balance weight 21 is fixed to the bracket 20 with the bolt 23, the protrusion 21f comes into abutment against the inner face of the side plate 22b and also the leading end of the bolt 23 is placed in abutment against the outer face of the side plate 22b.

### [Further Embodiments of First Embodiment]

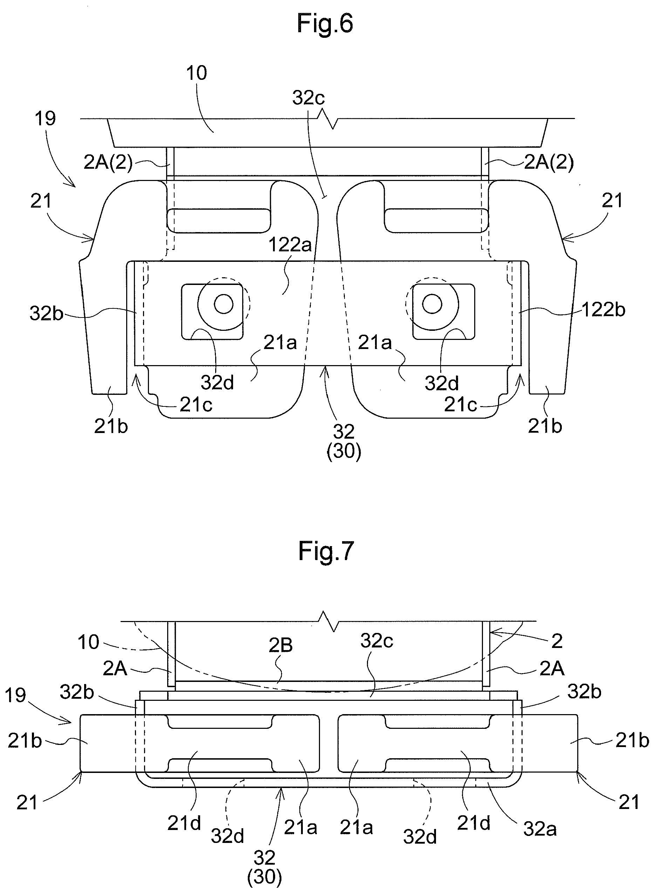

(1) In the foregoing embodiment, the balance weight 21 is fixed to the bracket 20 with the bolt 23 that laterally extends through the outer side portion 21b. However, the arrangement for fixing the balance weight 21 to the bracket 20 is not limited to the arrangement relating to the foregoing embodiment. For instance, the balance weight 21 may be fixed to the bracket 20 with a bolt that extends through the front plate 22a in the front/rear direction.
(2) In the foregoing embodiment, the lateral width W1 between the left end of the left balance weight 21 and the right end of the right balance weight 21 is set wider than the lateral width W2 between the left end of the left main frame 2A and the right end of the right main frame 2A. However, the lateral width W1 between the left end of the left balance weight 21 and the right end of the right balance weight 21 may be set narrower than the lateral width W2 between the left end of the left main frame 2A and the right end of the right main frame 2A.
(3) In the foregoing embodiment, the balance weights 21 do not protrude to the machine body outer side beyond the turning locus T of the front wheels 3F. However, the balance weights 21 may protrude to the machine body outer side beyond the turning locus T of the front wheels 3F as long as the balance weights 21 are attached to the bracket 20 without protruding to more front side than the front face of the bracket 20.
(4) In place of the bracket 20 relating to the foregoing embodiment, it is possible to employ a bracket 30 shown in Fig. 6 and Fig. 7. As shown in Fig. 6 and Fig. 7, the bracket 30 is bolt-fixed to the transverse frame 2B extending between/across the front end portions of the left and right main frames 2A of the machine body frame 2. The bracket 30 includes a frame portion 32 in the form of a framework as seen in a plan view. The frame portion 32 includes a front plate 32a, left and right side plates 32b and a rear plate 32c. At left and right opposed portions of the front plate 32a corresponding respectively to the left and right balance weights 21, opening portions 32d are formed.
(5) Incidentally, the present invention is not limited to the foregoing embodiments, but is limited merely by the scope of the appended claims.

### [Second non-claimed example]

Next, a non-claimed example will be explained with reference to the accompanying drawings.

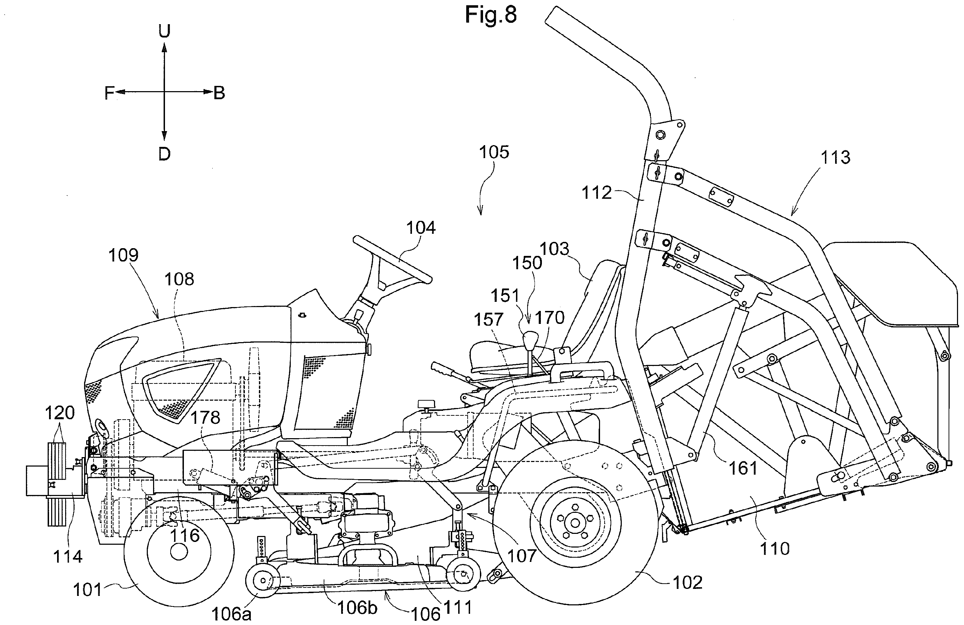

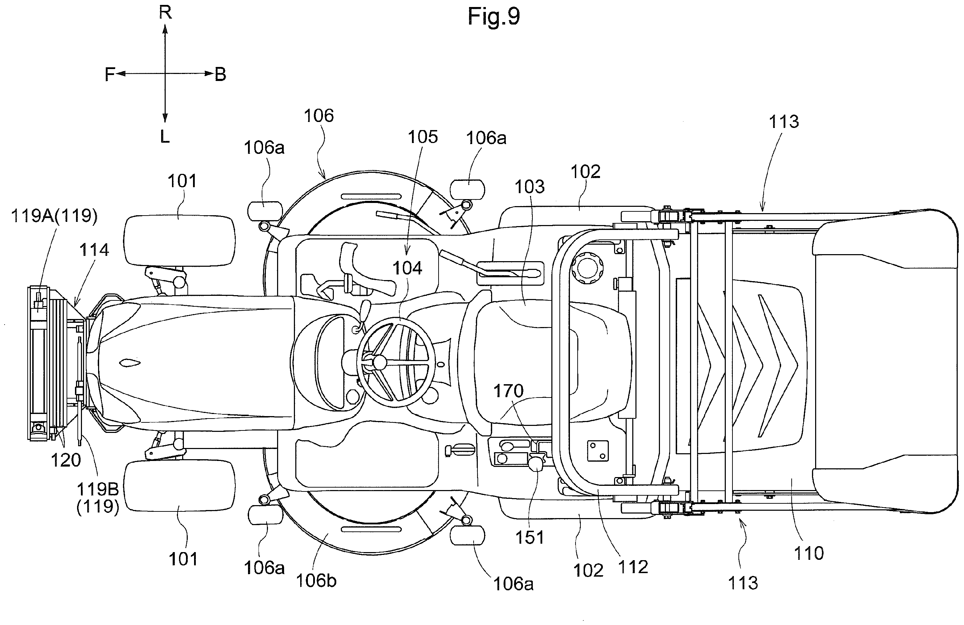

Incidentally, in the following discussion, respecting a vehicle body of a riding grass mower machine, the direction of arrow F shown in Figs. 8, 9 is defined as "vehicle body front side", the direction of arrow B is defined as "vehicle body rear side", and the direction of arrow U shown in Fig. 8 is defined as "vehicle body upper side", the direction of arrow D is defined as "vehicle body lower side", the direction of arrow L shown in Fig. 9 is defined as "vehicle body left side" and the direction of arrow R is defined as "vehicle body right side", respectively.

### [General Configuration of Riding Grass Mower Machine in Second non-claimed Example]

As shown in Figs. 8 and 9, a riding grass mower machine includes a vehicle body mounting a pair of left and right front wheels 101 which are pivotally steerable, a pair of left and right rear wheels 102 which are drivable, and a driving section 105 including a driver's seat 103 and a steering wheel 104 for steering the front wheels 101. Between the front wheels 101 and the rear wheels 102, there is provided a grass mower device 106 for grass or lawn cutting operations. This grass mower device 106 is supported to the vehicle body via a link mechanism 106 extending from the vehicle body to be vertically pivotable. The grass mower device 106 is lifted up/down by a pivotal movement of the link mechanism 107 between a lowered work state in which a gauge wheel 106a is placed on the ground surface and an elevated non-work state in which the gauge wheel 106a is lifted up from the ground surface. At a front portion of the vehicle body, there is formed an engine section 109 having an engine 108 that outputs power to be transmitted to the rear wheels 102 and the grass mower device 106. At a rear portion of the vehicle body, a grass collecting container 110 is supported. Between the grass mower device 106 and the grass collecting container 110, there is provided a conveyer duct 111 for conveying cut grass/lawn pieces obtained by the grass mower device 106 to the grass collecting container 110. The conveyer duct 111 is provided to extend through between the left and right rear wheels 102 in the front/rear direction below the vehicle body. The grass collecting container 110 is supported to the vehicle body rear portion via a strut frame 112 vertically mounted at a rear portion of the vehicle body and a pair of left and right link mechanisms 113 extending vertically pivotally and rearwardly from the strut frame 112 to the opposed lateral sides of the grass collecting container 110. The grass collecting container 110 is lifted up/down by pivotal operations of the left and right link mechanisms 113 between a lowered reserving state for reserving cut grass/lawn pieces and an elevated discharging state for discharging the reserved cut grass/lawn pieces..

### [Balance Weight and Jacking Device in Second non-claimed Example]

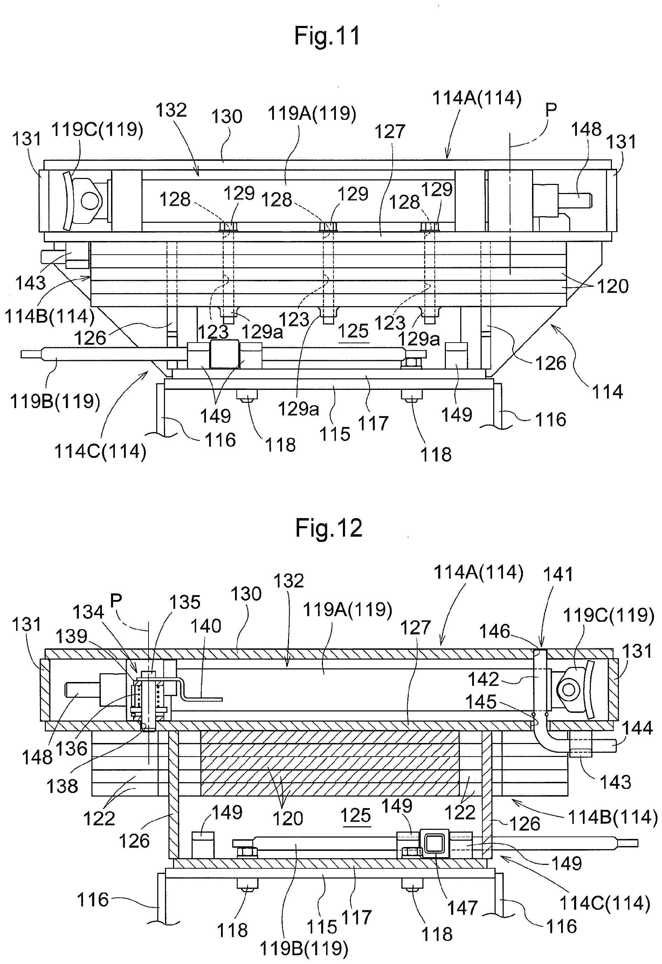

As shown in Figs. 8 and 9, at a front portion of the vehicle body, a balance weight attaching portion 114 is provided. More particularly, as shown in Figs. 11 and 12, at the front portion of the vehicle body, there is provided a front connecting frame 115 of the vehicle body frame. This front connecting frame 115 is connected to front portions of a pair of left and right front/rear oriented frames 116 of the vehicle body frame. And, a connecting member 117 provided at a rear portion of the balance weight attaching portion 114 is connected to the front connecting frame 115 with connecting bolts 118. The balance weight attaching portion 114 protrudes forwardly from the vehicle body frame. The balance weight attaching portion 114 includes a jacking support portion 114A for supporting a jacking body 119A of a jacking device 119, a weight storage portion 114B capable of storing a plurality of balance weights 120, and a handle storage portion 114C capable of storing an operational handle 119B of the jacking device 119.

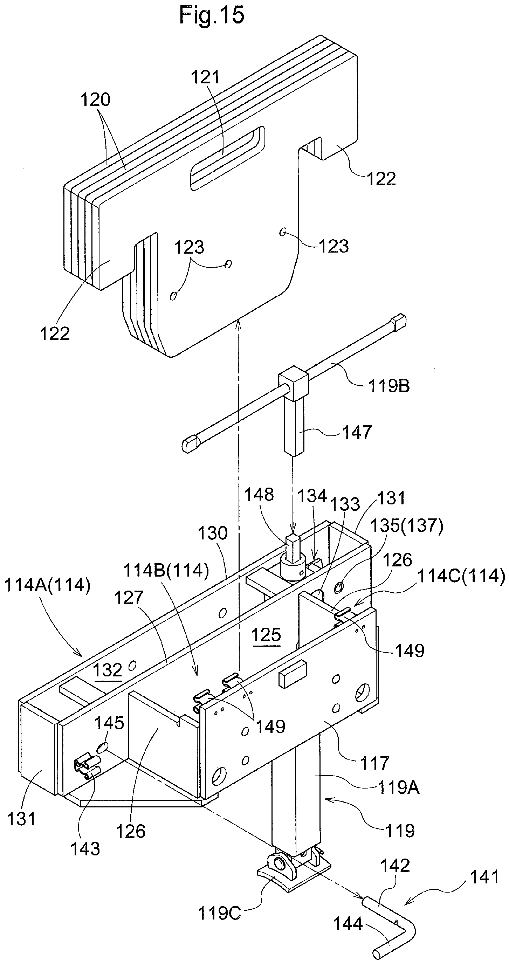

Each balance weight 120, as shown in Fig. 15, includes a support hole 121 formed at an upper portion of the balance weight 120, retaining portions 122 protruding to the left and right sides from upper portions of the balance weight 120, and fastening rod holes 123 formed at three portions in the lateral width direction of the balance weight 120.

The weight storage portion 114B, as shown in Figs. 11, 12 and 15, includes a weight insertion space 125, weight hooking portions 126 provided on the left and right opposed sides of the weight insertion space 125 and a fixing wall portion 127 provided on the front side of the weight insertion space 125. In the fixing wall portion 127, there are formed fastening rod holes 128 corresponding to the fastening rod holes 123 of the balance weight 120.

In the weight storage portion 114B, as shown in Figs. 11 and 12, the plurality of balance weights 120 to be attached will be inserted respectively from above into the weight insertion space 125 and the left and right retaining portions 122 will be hooked to the weight hooking portions 126, so that the plurality of balance weights 120 will be placed side by side in the front/rear direction and received and supported from under by the weight hooking portions 126. Then, weight fastening rods 129 will be attached to the fastening rod holes 123 of the respective plurality of balance weights 120 and the fastening rod holes 128 of the fixing wall portion 127, and screw members 129a attached to the end portions of the weight fastening rods 129 will be fastened, so that the plurality of balance weights 120 will be fastened with the screw members 129a to the fixing wall portion 127, whereby the plurality of balance weights 120 can be attached to the weight storage portion 114B. In the instant example, five balance weights 120 are attached. However, the number of balance weights to be attached is not limited thereto, but fewer than four or more than six balance weights 120 can be attached.

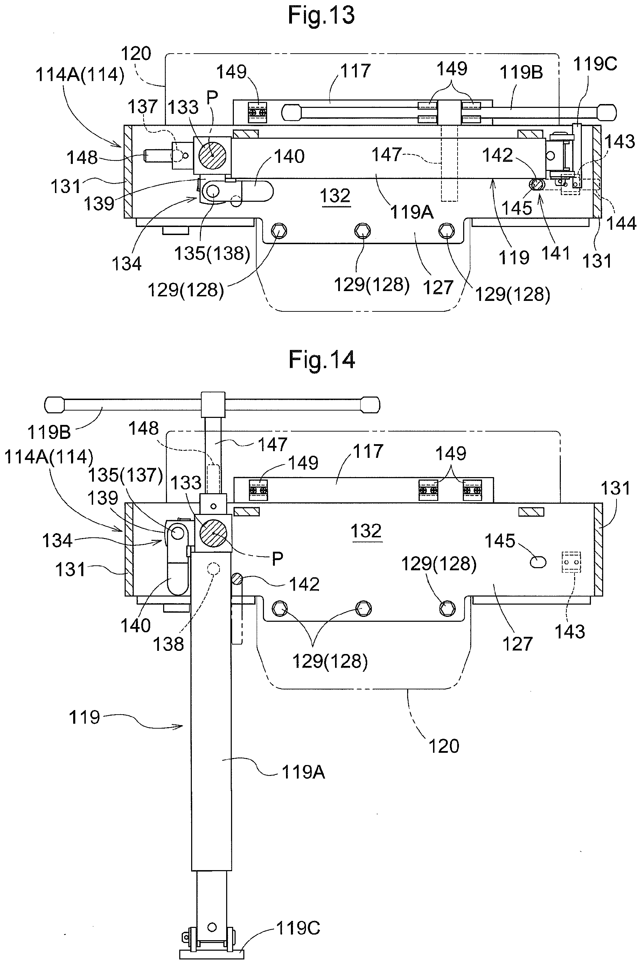

The jacking device 119, as shown in Fig. 14, includes the jacking body 119A and the operational handle 119B for extending/contracting the jacking body 119A.

The jacking support portion 114A, as shown in Figs. 11 and 15, is provided at a portion of the balance weight attaching portion 114 which portion is located on more front side than the weight storage portion 114B of the balance weight attaching portion 114. The jacking support portion 114A includes a front wall portion 130 provided on more front side than the fixing wall portion 127, and left and right side wall portions 131 connecting the front wall portion 130 to the fixing wall portion 127. The fixing wall portion 127, the front wall portion 130 and the side wall portions 131 together form a storage space 132 for storing the jacking body 119A under its contracted state.

The jacking body 119A, as shown in Figs. 13 and 14, includes a support shaft 133 provided at the base portion of the jacking body 119A. This support shaft 133 is supported to the fixing wall portion 127 and the front wall portion 130. The jacking body 119A is supported to the jacking support portion 114A to be vertically pivotable about a front/rear oriented axis P of the support shaft 133 between an elevated storage posture and a lowered use posture.

As shown in Fig. 13, the jacking body 119A, when posture-switched to the elevated storage posture, will enter the storage space 132 from under and will be set under a transversely collapsed state along the vehicle body lateral width direction in the storage space 132.

As shown in Fig. 14, the jacking body 119A, when posture-switched to the elevated storage posture, will protrude, on its free end side, downwards from the storage space 132, so that the jacking body 119A, as a whole, will be set under a vertically oriented state along the vertical direction of the vehicle body.

As shown in Figs. 12 and 13, at the base end side portion of the jacking body 119A, there is provided a first posture maintaining mechanism 134 for maintaining the jacking body 119A under the lowered use posture and the elevated storage posture. This first posture maintaining mechanism 134, as shown in Figs. 12, 13 and 14, includes a positioning pin 135 supported to the base end side portion of the jacking body 119A, a lock spring 136 fitted on the positioning pin 135, and positioning holes 137, 138 formed at two portions of the fixing wall portion 127.

The positioning pin 135 is slidably supported to a bracket 139 provided at a portion of the jacking body 119A which portion is located laterally of the support shaft 133. The lock spring 136 is provided between a spring receiving pin included in the positioning pin 135 and a support side portion of the bracket 139 and slidably urges the positioning pin 135 toward the fixing wall 127.

In the first posture maintaining mechanism 134, as shown in Figs. 12 and 13, when the jacking body 119A is posture-switched to the elevated storage posture, there is provided a first active state in which the positioning pin 135 will be engaged into the positioning hole 138 by the lock spring 136 and the base end side portion of the jacking body 119A will be retained to the fixing wall portion 127 of the balance weight attaching portion 114 by the positioning pin 135, thus maintaining the jacking body 119A under the elevated storage posture.

In the first posture maintaining mechanism 134, as shown in Fig. 14, when the jacking body 119A is posture-switched to the lowered use posture, there is provided a second active state in which the positioning pin 135 is engaged into the positioning hole 137 by the lock spring 136 and the base end side portion of the jacking body 119A is retained to the fixing wall portion 127 by the positioning pin 135, thus maintaining the jacking body 119A under the lowered use posture.

In the first posture maintaining mechanism 134, when the positioning pin 135 is slidably operated against the lock spring 136 by a releasing lever 140 provided on one side of the positioning pin 135, whereby the positioning pin 135 will be withdrawn from the positioning hole 137 and the positioning hole 138, thus releasing the retention of the jacking body 119A under the lowered use posture and the elevated storage posture, thus providing a releasing state to allow posture switchover of the jacking body 119A.

As shown in Fig. 12, at the portion of the jacking body 119A corresponding to the free end side, there is provided a second posture maintaining mechanism141 for maintaining the jacking body 119A under the elevated storage posture. This second posture maintaining mechanism 141, as shown in Figs. 12, 14 and 15, includes a support pin 142 and a catcher 143 supported to the fixing wall portion 127. The support pin 142, as shown in Fig. 15, includes a lever 144 that extends from one end portion of the support pin 142 in the direction perpendicular to the support pin 142.

In the second posture maintaining mechanism 141, as shown in Fig. 12, when the jacking body 119Ais posture-switched to the elevated storage posture, the support pin 142 will be inserted from behind into the pin hole 145 (see Figs. 14, 15) of the fixing wall portion 127 and further inserted into the pin hole 146 (see Fig. 12) of the fixing wall portion 127, whereby the support pin 142 is located downwardly of the free end side portion of the jacking body 142 and the free end side portion of the jacking body 119A will be received and supported from under by the support pin 142, thus providing an active state for maintaining the jacking body 119A under the elevated storage posture. With establishment of the state of the support pin 142 receiving and supporting the jacking body 119A, the lever 144 will be engaged into the catcher 143, so that the catcher 143 prevents withdrawal of the support pin 142, thus the second posture maintaining mechanism 141 is maintained under the active state.

With withdrawal of the lever 144 out of the catcher 143 rearwards, the support pin 142 will be withdrawn rearwards from the fixing wall portion 127, thus providing a releasing state for the second posture maintaining mechanism 141 to release the receiving/supporting of the jacking body 119A, thus allowing switchover of the jacking body 119A to the lowered use posture.

As shown in Fig. 15, an output shaft portion 147 is extended from an intermediate portion of the operational handle 119B in the direction perpendicular to the axis of the operational handle 119B. As shown in Fig. 14, the operational handle 119B can be detachably attached to the jacking body 119A by the output shaft portion 147. Under the attached state, the jacking body 119A can be extended/contracted. More particularly, the output shaft portion 147 is formed like a tube engageable from above an outer circumferential portion of an operational shaft portion 148 of the jacking body 119A. When the output shaft portion 147 is engaged with the operational shaft portion 148, the output shaft portion 147 and the operational shaft portion 148 become engaged with each other to be non-rotatable relative to each other, so that rotation of the operational handle 119B is transmitted to the operational shaft portion 148.

The handle storage portion 114C, as shown in Fig. 11, is provided at a portion located on more rear side than the weight storage portion 114B of the balance weight attaching portion 114. As shown in Figs. 11 and 12, at the handle storage portion 114C, there are provided three catchers 149 arranged side by side in the vehicle body transverse direction. These three catchers 149 are supported to the front face side of the connecting member 117.

In the handle storage portion 114C, as shown in Figs. 11, 12 and 13, the output shaft portion 147 extends downwards from the operational handle 119B and also the output shaft portion 147 is fitted between the first catcher 149 and the second catcher 149 from the left end of the three catchers 149, thus engaging the operational handle 119B into the first and second catchers 149 from the front side, whereby the operational handle 119B is detachably held to the first and second catchers 149, and the operational handle 119B can be stored in the handle storage portion 114C.

In the handle storage portion 114C, the output shaft portion 147 is inserted between the second catcher 149 and the third catcher 149 from the left end of the three catchers 149, so the operational handle 119B is detachably held to the three catchers 149. In this manner too, the operational handle 119B can be stored in the handle storage portion 114C.

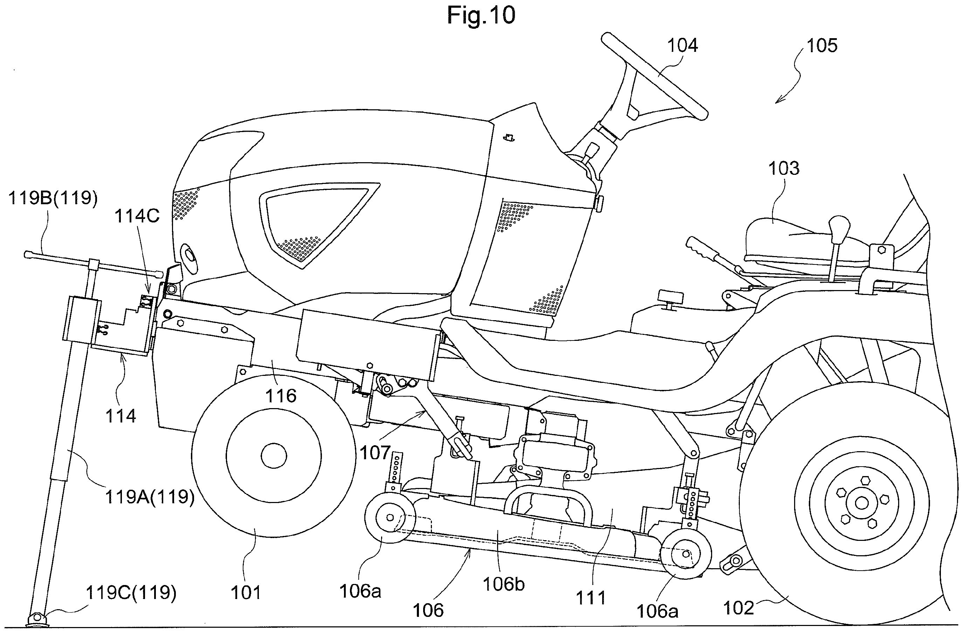

Namely, as shown in Figs. 13, 14, when the first posture maintaining mechanism 134 is set to the releasing state by withdrawing the positioning pin 135 out of the positioning hole 138 of the fixing wall portion 127 and the second posture maintaining mechanism 141 is set to the releasing state by withdrawing the support pin 142 out of the front wall portion 130 and the fixing wall portion 127, the jacking body 119A will be posture-switched to the lowered use posture. Upon switchover of the jacking body 119A to the lowered use posture, the positioning pin 135 will be inserted into the positioning hole 137 by the lock spring 136, thus setting the first posture maintaining mechanism 134 to the second active state. In this, as shown in Fig. 14, by attaching the support pin 142 of the second posture maintaining mechanism 141 to the front wall portion 130 and the fixing wall portion 127 on the lateral side of the jacking body 119A, the support pin 142 can be utilized as a member for maintaining the jacking body 119A under the lowered use posture. Upon establishment of the state of the jacking body 119A being maintained under the lowered use posture by the first posture maintaining mechanism 134, the operational handle 119B will be attached to the operational shaft portion 148 of the jacking body 119Aby the output shaft portion 147. Upon completion of the attachment of the operational handle 119B to the jacking body 119A, the operational handle 119B will be rotatably operated about the axis of the operational shaft portion 148, thus operating the jacking body 119A to its extension side, and even after the ground contacting member 119C of the jacking body 119A comes into contact with the ground surface, the jacking body 119A will be further operated to the extension side. With this, as shown in Fig. 10, the vehicle body front end side will be lifted up by the jacking body 119A about the axle axis of the rear wheels 102 as the pivot. This lift-up of the vehicle body front end side is effected with the ground contacting reaction force being applied to the balance weight attaching portion 114 which is formed sturdy. With this lift-up of the vehicle body front end side, the grass mower device 106 will be lifted forwardly upwards, so that a maintenance work can be carried out to the inside of the grass mower device 106 via the gap formed between a cutter blade housing 106b and the ground surface.

Under the lifted-up condition of the vehicle body front end side, the operational handle 119B will be rotatably operated in the opposite direction to the direction at the time of lift-up, thus operating the jacking body 119A to its contraction side. Upon realization of the contracted state of the jacking body 119A, the operational handle 119B will be removed from the jacking body 119A and also the positioning pin 135 will be withdrawn from the positioning hole 137. Upon establishment of the releasing state of the first posture maintaining mechanism 134, the jacking body 119A will be posture-switched to the elevated storage posture. Upon realization of the switchover of the jacking body 119A to the elevated storage posture, the positioning pin 135 will be inserted into the positioning hole 138 by the lock spring 136, so that the first posture maintaining mechanism 134 enters the first active state. Upon establishment of this first active state of the first posture maintaining mechanism 134, the support pin 142 will be attached to the fixing wall portion 127 and the front wall portion 130, thus setting the second posture maintaining mechanism 141 to the active state. With this, the base end side portion of the jacking body is supported by the first posture maintaining mechanism 134 and also the free end side portion of the jacking body 119A is supported by the second posture maintaining mechanism 141, so that the jacking body 119A can be maintained under the elevated storage posture firmly and reliably.

In case the jacking body 119A is stored, by storing the operational handle 119B in the handle storage portion 114C, the operational handle 119B will be stored in the vicinity of the jacking body 119A.

### [Operational Device for Grass Mower Device and Grass Collecting Container in Second non-claimed Example]

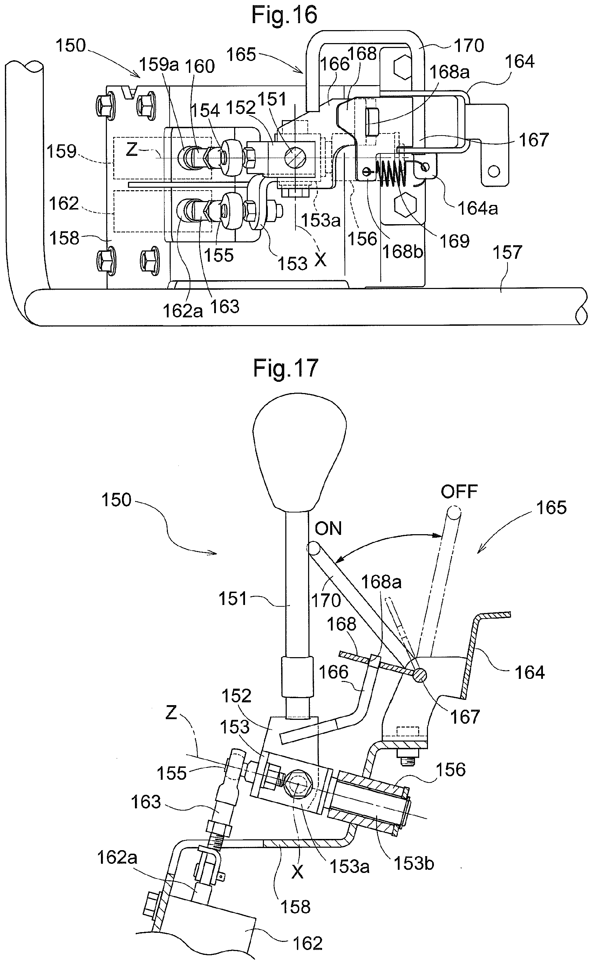

An operational device 150 for lifting up/down the grass mower device 106 and also lifting up/down the grass collecting container 110 is configured as shown in Figs. 16 and 17.

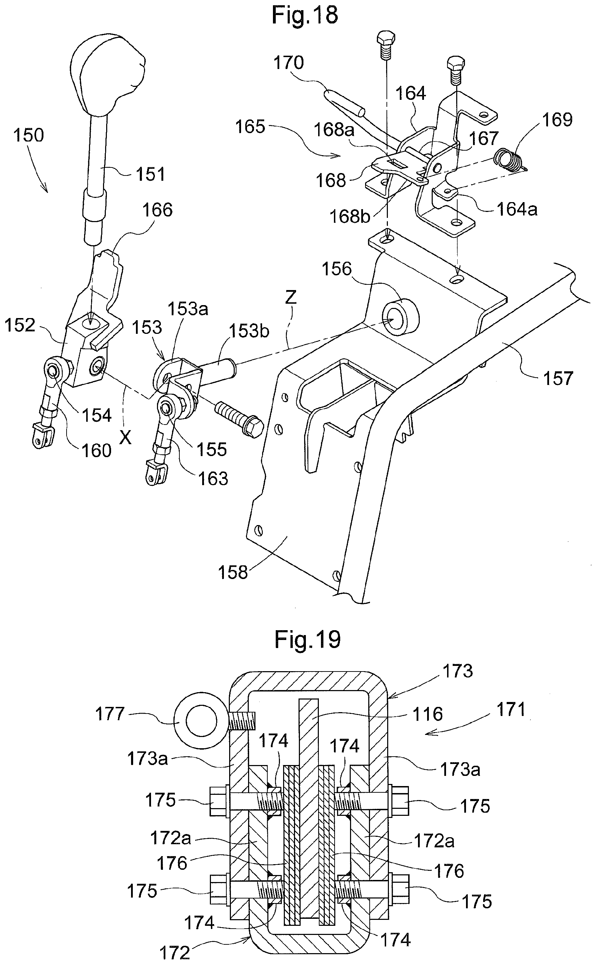

The operational device 150 includes a single operational lever 151 as shown in Fig. 18, a first support member 152 and a second support member 153. From a front portion of the first support member 152, a first operational shaft 154 protrudes forwardly. The second support member 153 includes a bifurcated portion 153a, a support shaft 153b protruding rearwards from the bifurcated portion 153a and a second operational shaft 155 protruding forwardly from one supporting side portion of the pair of left and right supporting sides of the bifurcated portion 153a.

As shown in Figs. 16 and 17, the operational lever 151 extends upwards from the first support member 152. The first support member 152 is supported inside the bifurcated portion 153a of the second support member 153 to be pivotable about a first axis X. The support shaft 153b of the second support member 153 is supported to a boss portion 156 to be rotatable about a second axis Z. The boss portion 156 is formed in a control panel 158 supported to a fender frame 157 included in the vehicle body. The second support member 153 is supported to the control panel 158 to be rotatable about a second axis Y. The first axis X and the second axis Y are perpendicular to each other. The operational lever 151 is supported to the control panel 158 to be pivotable about the first axis X and pivotable also about the second axis Y.

The first operational shaft 154 is provided in the first support member 152, with the axis of the first operational shaft 154 being located coaxially with the second axis Y. The first operational shaft 154 and a slidable spool 159a of a first operational valve 159 provided on the back side of the control panel 158 are operably coupled to each other via a first coupling member 160 (see Figs. 16 and 18). At a portion of the first coupling member 160 coupled with the first operational shaft 154, there is provided a spherical face joint function that allows relative pivotal movement between the first coupling member 160 and the first operational shaft 154. The first operational valve 159 is connected to a first hydraulic cylinder 161 (see Fig. 8) that pivotally operates the link mechanism 113, so that by extending/contracting the first hydraulic cylinder 161, the grass collecting container 110 is lifted up/down.

The second operational shaft 155 is provided in the second support member 153 with lateral displacement relative to the second axis Z. The second operational shaft 155 and a slidable spool 162a of a second operational valve 162 provided on the back side of the control panel 158 are operably coupled to each other via a second coupling member 163 (see Figs. 16 and 18). At a portion of the second coupling member 163 coupled with the second operational shaft 155, there is provided a spherical face joint function that allows relative pivotal movement between the second coupling member 163 and the second operational shaft 155. The second operational valve 162 is connected to a second hydraulic cylinder 178 (see Fig. 8) that pivotally operates the link mechanism 107, so that by extending/contracting the second hydraulic cylinder 178, the grass mower device 106 is lifted up/down.

Namely, when the operational lever 151 is pivotally operated about the first axis X, the first support member 152 is pivoted together with the operational lever 151, so that the first operational shaft 154 is vertically pivoted about the first axis X and the spool 159a of the first operational valve 159 is pushed/pulled by the first operational shaft 154 and the first operational valve 159 controls the first hydraulic cylinder 161. With this, the link mechanism 113 is pivoted up/down, thus elevating/lowering the grass collecting container 110. In this case, the first support member 152 is pivoted about the first axis X relative to the second support member 153 and the second support member 153 is not operated and the second operational valve 162 is not operated.

When the operational lever 151 is pivotally operated about the second axis Z, the first support member 152 and the second support member 153 are pivoted together with the operational lever 151, so that the second operational shaft 155 is vertically pivoted about the second axis Z and the spool 162a of the second operational valve 162 is pushed/pulled by the second operational shaft 155 and the second operational valve 162 controls the second hydraulic cylinder 178. With this, the link mechanism 107 is pivoted up/down, thus elevating/lowering the grass mower device 106. In this case, even when the first support member 152 is pivoted together with the operational lever 151, it is pivoted about the second axis Z, so the first operational shaft 154 is only rotated about the second axis Z relative to the first coupling member 160, not being vertically pivoted and the first operational valve 159 is not operated.

As shown in Figs. 16 and 17, a neutral lock mechanism 165 is provided between the operational lever 151 and a base member 164 supported to the control panel 158. This neutral lock mechanism 165 can lock the operational lever 151 at a neutral operational position corresponding to the neutral states of the first operational valve 159 and the second operational valve 162.

Specifically, the neutral lock mechanism 165, as shown in Fig. 18, includes a locked member 166 extending to the base member side from the first support member 152, a lock member 168 pivotally supported to the base member 164 via a support shaft 167, and a spring 169. At a free end side portion of the lock member 168, there is formed an opening 168a that allows engagement/disengagement of the lock member 168 to/from the locked member 166. To the support shaft 167, there is connected a switching lever 170 for pivotally operating the lock member 168. The spring 169, as shown in Fig. 16, is connected to a spring hook portion 164a of the base member 164 and a spring hook portion 168b of the lock member 168.

With the neutral lock mechanism 165, as shown in Fig. 16 and as shown also by the solid line in Fig. 17, when the operational lever 151 is located at the neutral operational position, if the switching lever 170 is switched from a releasing position [OFF] to a locking position [ON], the lock member 168 is pivoted toward the operational lever side to come into engagement with the locked member 166, whereby pivoting of the locked member 166 about the first axis X and pivoting of the locked member 166 about the second axis Z are restricted by the locking member 168 and the operational lever 151 is locked at the neutral operational position. When the switching lever 170 is switched to the locking position [ON], the spring 169 is reversed to the locking side and the switching lever 170 is maintained at the locking position [ON] and the locking member 168 is maintained at the position engaged with the locked member 166 respectively by the spring 169.

Further, with the neutral lock mechanism 165, as shown by the two-dot chain line in Fig. 17, when the switching lever 170 is switched from the locking position [ON] to the releasing position [OFF], the lock member 168 is pivoted to the opposite side to the operational lever side to be disengaged from the locked member 166, thus allowing pivoting of the locked member 166 about the first axis X and also pivoting of the locked member 166 about the second axis Z and releasing the locking of the operational lever 151 at the neutral operational position. When the switching lever 170 is switched to the releasing positon [OFF], the switching over 170 is maintained at the releasing positon [OFF] and the lock member 166 is maintained at the position disengaged from the locked member 166 respectively by the spring 169.

### [Arrangement of Attachment in Second Embodiment]

Fig. 19 is a vertical section view showing an attachment 171 when attached to the left and right front/rear oriented frames 116 of the vehicle body frame. This attachment 171 is provided for providing the vehicle body with a belt hooking member 177, e.g. when the vehicle body is to be fixed to a load carrying deck with a belt.

The attachment 171, as shown in Fig. 19, includes a lower side member 172 formed like an upwardly opened letter "U"-shape to be engaged with the front/rear oriented frame 116 from under, and an upper side member 173 formed like a downwardly opened letter "U"-shape to be engaged with the outer circumferential portion of the lower side member 172 from above.

Screw members 174 are attached to a plurality of positions inside the lower side member 172. Each screw member 174 is attached to the lower side member 172 by welding thereto. The lower side member 172 and the upper side member 173 are configured to be fixed to the front/rear oriented frame 116 by inserting and fastening a side plate portion 173a of the upper side member 173, a side plate portion 172a of the lower side member 172 and attachment bolts 175 through which the screw members 174 are inserted. And, adjustment plates 176 are interposed between the attachment bolt 175 and the front/rear oriented frame 116. In case e.g. the thickness of the frame to which the attachment is to be attached differs, adjustment can be made for preventing inadvertent removal of the thread portion of the attachment bolt 175 from the screw member 174 by adjusting the number of the adjustment plates 176 to be interposed.

The belt hooking member 177 is attached to the upper side member 173. The belt hooking member 177 is attached via threading-in arrangement in order to allow replacement thereof by a different belt hooking member having a different shape or size.

### [Further Embodiments of Second non-claimed Example]

(1) In the foregoing example, there was disclosed an example in which the jacking body 119A is supported to a portion located on more front side than the weight storage portion 114B of the balance weight attaching portion 114 and the handle storage portion 114C is provided at a portion located on more rear side than the weight storage portion 114B of the balance weight attaching portion 114. However, the invention is not limited thereto. For instance, the portion supporting the jacking body 119A, the weight storage portion 114B and the handle storage portion 114C can be arranged in any desired order, such as the jacking body being supported to a portion on more rear side than the weight storage portion 114B, the handle storage portion 114C being provided at a portion on more front side than the weight storage portion 114B, etc.
(2) In the foregoing example, there was disclosed an example in which the second posture maintaining mechanism 141 is provided. However, the invention may be embodied without providing the second posture maintaining mechanism 141.
(3) As specific arrangements, such as the arrangement of supporting the balance weights 120, the arrangement of supporting the jacking body 119A, any arrangement may be employed.

### [Third non-claimed Example]

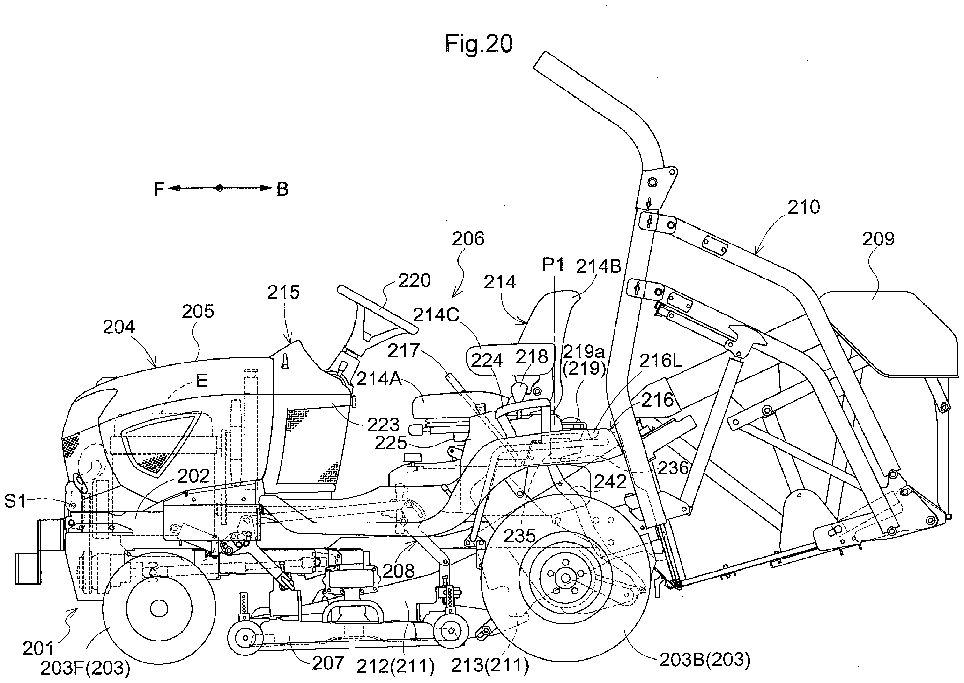

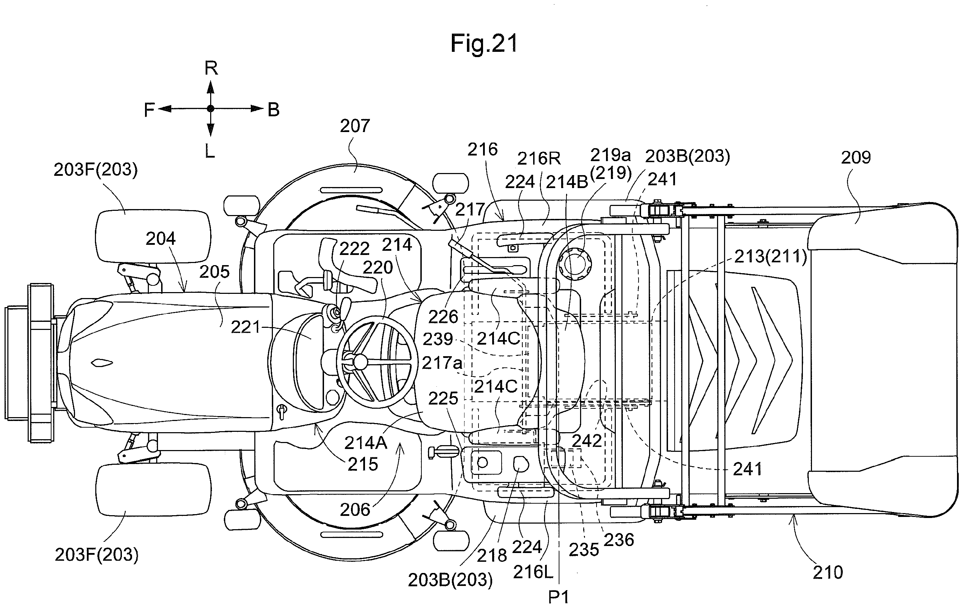

Next, a non-claimed example will be explained with reference to the drawings. Incidentally, in the following discussion, the direction of arrow F is defined as "vehicle body front side" (see Fig. 20 and Fig. 21), the direction of arrow B is defined as "vehicle body rear side" (see Fig. 20 and Fig. 21), the direction of arrow L is defined as "vehicle body left side" (see Fig. 21) and the direction of arrow R is defined as "vehicle body right side", (see Fig. 21), respectively.

### [General Configuration of Riding Grass Mower Machine in Third non-claimed Example]

Fig. 20 and Fig. 21 show a riding grass mower machine (corresponding to a "work vehicle" relating to the present invention). This riding grass mower machine includes a traveling machine body 201. The traveling machine body 201 includes a machine body frame 202 and a traveling device 203. The traveling device 203 includes a pair of left and right steerable front wheels 203F and a pair of left and right drivable rear wheels 203B. At a front portion of the traveling machine body 201, an engine section 204 is provided. The engine section 204 includes an engine E and a hood 205 for housing the engine E, etc. The engine E is mounted at a front portion of the machine body frame 201. The hood 205 is configured to be pivotally opened/closed about a front pivot S1.

Rearwardly of the engine section 204, a driving section 206 is provided. Under the traveling machine body 201, a mower 207 is provided between the front wheels 203F and the rear wheel 203B. The mower 207 is supported to the machine body frame 202 to be liftable up/down via a link mechanism 208. At a rear portion of the traveling machine body 201, there is supported a grass collecting container 209 for collecting cut grass pieces from the mower 207. The grass collecting container 209 is supported to the machine body frame 202 via a link mechanism 210 to be liftable up/down and openable/closable also. Between the mower 207 and the grass collecting container 209, there is provided a grass collecting duct 211 for guiding the cut grass pieces from the mower 207 toward the grass collecting container 209. The grass collecting duct 211 includes a mower side duct 212 provided in the mower 207 and a machine body side duct 213 provided in the machine body frame 202.

### [Driving Section in Third non-claimed Example]

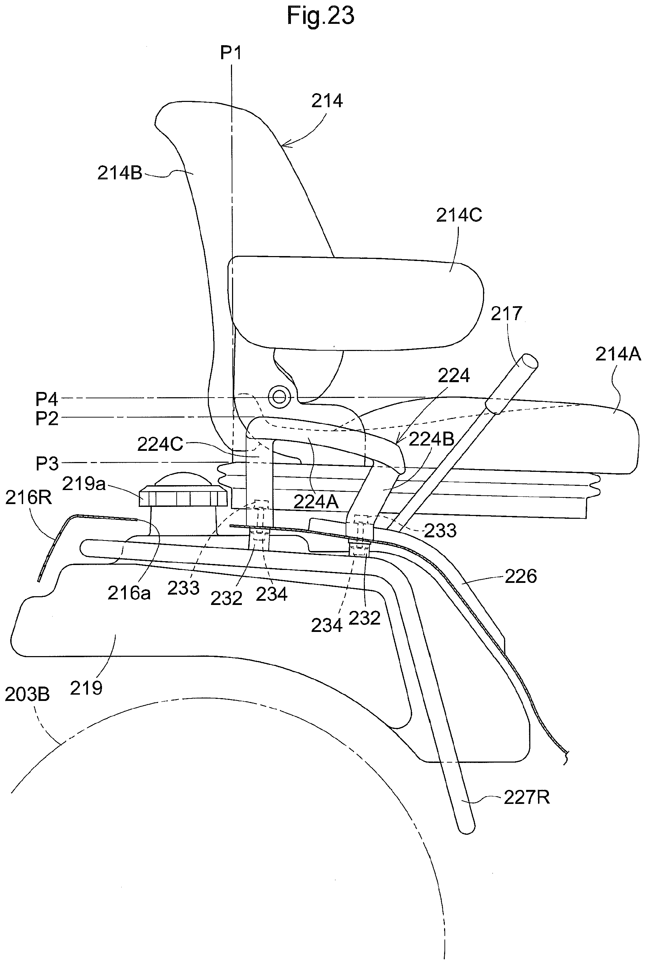

The driving section 206 includes a driver's seat 214, a control tower 215, a fender 216, and a duct lever 217 (corresponding to an "operational lever" relating to the present invention). At the driver's seat 214, there are provided a seat portion 214A, a backrest portion 214B and left and right armrests 214C. Downwardly of the rear portion of the fender 216, a fuel tank 219 (see Fig. 23) is provided. At the control tower 215, there are provided a steering wheel 220, a meter panel 221, a key switch 222 for instructing start-up of the engine E, and a panel 223 for covering e.g. a strut (not shown) supporting the steering wheel 220.

The duct lever 217 is a lever used for opening/closing a bottom plate 239 of the machine body side duct 213. The duct lever 217 is disposed on the right side of the driver's seat 214. The duct lever 217 is configured to be pivotable to the front side and to the rear side.

A work lever 218 is a lever for lifting up/down the mower 207 and lifting up/down or opening/closing the grass collecting container 209. This work lever 218 is disposed on the right side of the driver's seat 214. The work lever 218 is configured to be pivotable to the left side and to the right side.

The fender 216 includes a left fender portion 216L that covers the left side rear wheel 203B and a right fender portion 216R that covers the right side rear wheel 203B. The left fender portion 216L and the right fender portion 216R are formed integral with a step portion constituting the floor of the driver's seat 206. In the fender 216, in an upper face portion of a portion thereof located on the left adjacent side of the driver's seat 214, there are provided a left handrail 224 and a left lever guide 225. The left lever guide 225 is a left lever guide for the work lever 218.

In the fender 216, in an upper face portion of a portion thereof located on the right adjacent side of the driver's seat 214, there are provided a right handrail 224 and a right lever guide 226. The right lever guide 226 is a lever guide for the duct lever 217. An oil inlet 219a of the fuel tank 219 is exposed to the outside via an opening 216a (see Fig. 23) formed in the upper face portion of the right fender portion 216R.

### [Handrail in Third non-claimed Example]

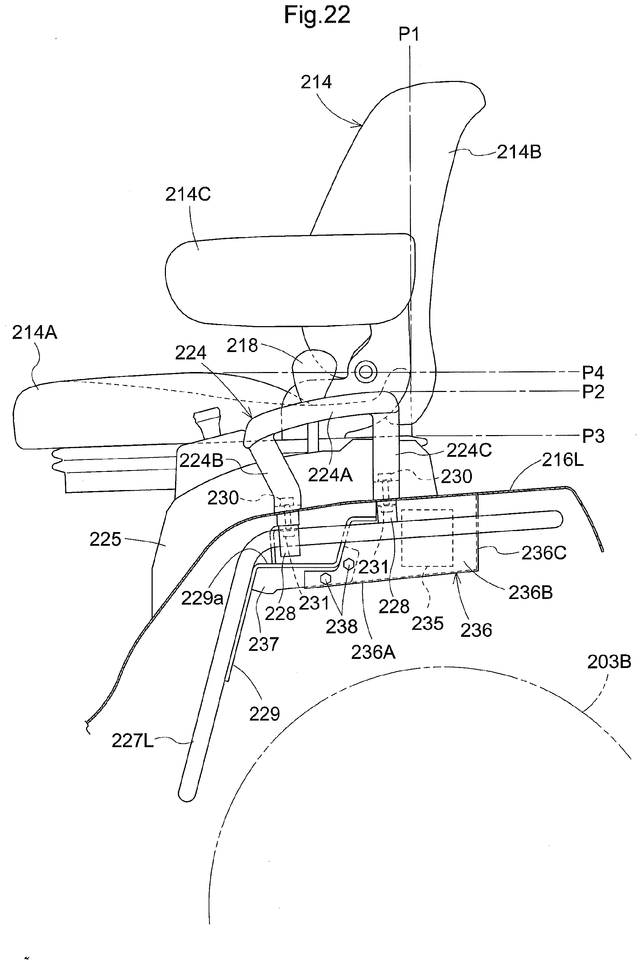

As shown in Figs. 22 through 25, the handrail 224 includes a front/rear extension portion 224A extending along the machine body front/rear direction, a front side vertical extension portion 224B extending downwards from the front end portion of the front/rear extension portion 224A, and a rear side vertical extension portion 224C extending downwards from the rear end portion of the front/rear extension portion 224A. The handrail 224 is disposed on more front side than a rear end P1 of the seat portion 214A. In other words, the handrail 224 is disposed in such a manner that it does not protrude rearwards beyond the rear end P1 of the seat portion 214A. An upper end (upper end of the front/rear extension portion 224A) P2 of the handrail 224 is disposed upwardly of a lower end P3 of the seat portion 214A and at a height position lower than an upper end P4 of the seat portion 214A.

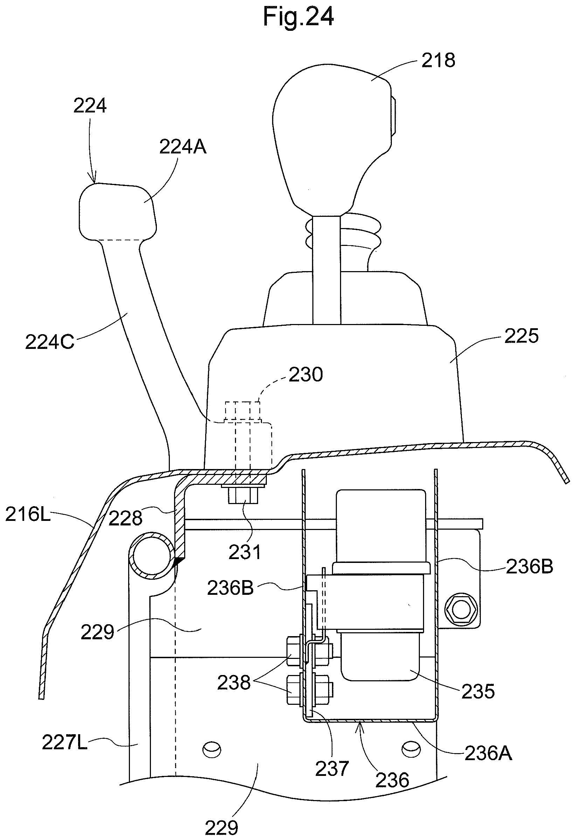

As shown in Fig. 22 and Fig. 24, the left handrail 224 is disposed on more laterally outer side (left side) than the left lever guide 225. The front/rear range of the left handrail 224 is overlapped with the front/rear range of the left lever guide 225. Specifically, the left handrail 224 is confined within the front/rear range of the left lever guide 225. The base portion of the rear side vertical extension portion 224C of the left handrail 224 enters to the inner side of the left lever guide 225 via an opening formed at the left side portion of the left lever guide 225.

Inside the left fender portion 216L, there is provided a left support frame 227L that supports e.g. the left handrail 224, etc. In the left support frame 227L, there are provided stays 228 on the front and rear sides to which the left handrail 224 is bolt-fixed. The left handrail 224 is bolt-fixed to the front and rear stays 228 as being placed on the upper face portion of the left fender portion 216L. In the left support frame 227L, there is provided a plate-like stay 229 that supports e.g. the work lever 218, etc. The lower end of the front side stay 228 is placed in abutment against an upper face 229a of the stay 229.

A bolt (front side bolt) 230 corresponding to the front side stay 228 is inserted from above into the base portion of the front side vertical extension portion 224. The front side bolt 230 extends vertically through the base portion of the front side vertical extension portion 224B, the upper face portion of the left fender portion 216L and the horizontal portion of the front side stay 228 and also is fastened to a nut 231 fixedly welded to the horizontal portion of the front side stay 228.

A bolt (rear side bolt) 230 corresponding to the rear side stay 228 is inserted from above into the base portion of the rear side vertical extension portion 224C. The rear side bolt 230 extends vertically through the base portion of the rear side vertical extension portion 224C, the upper face portion of the left fender portion 216L and the horizontal portion of the rear side stay 228 and also is fastened to a nut 231 fixedly welded to the horizontal portion of the rear side stay 228.

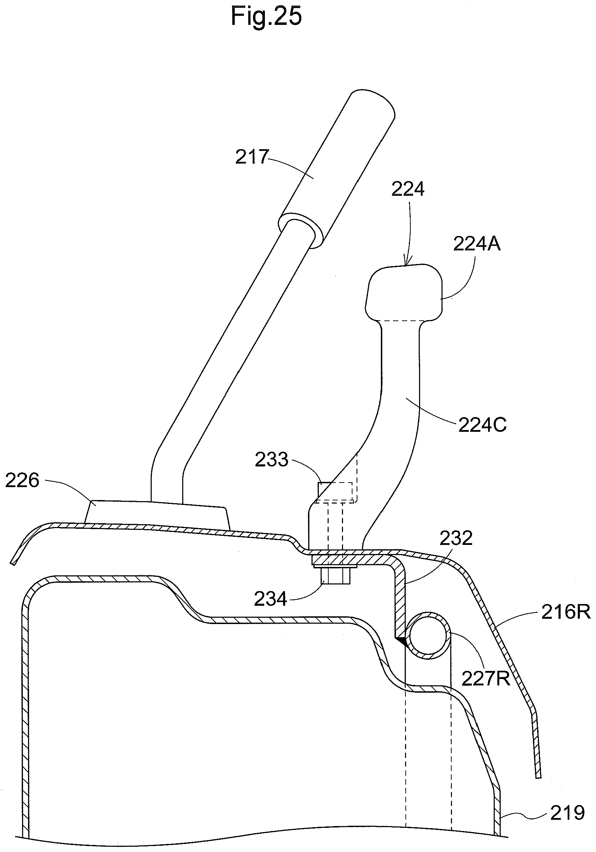

As shown in Fig. 23 and Fig. 25, the right handrail 224 is disposed on more laterally outer side (right side) than the right lever guide 226. The front/rear range of the right handrail 224 is overlapped with the front/rear range of the right lever guide 226. Specifically, the front/rear range of the front portion of the right handrail 224 is overlapped with the front/rear range of the rear portion of the right lever guide 226. The right handrail 224 is disposed on more front side than the oil inlet 219a of the fuel tank 219.

Inside the right fender portion 216R, there is provided a right support frame 227R that supports e.g. the right handrail 224, etc. The right support frame 227R is disposed along the fuel tank 219. A portion of the fuel tank 219 along the right support frame 227R is formed concave to the inner side of this fuel tank 219. In the right support frame 227R, there are provided stays 232 on the front and rear sides to which the right handrail 224 is bolt-fixed. The right handrail 224, as placed on the upper face portion of the right fender portion 216A, is bolt-fixed to the front and rear stays 232.

A bolt (front side bolt) 233 corresponding to the front side stay 232 is inserted from above into the base portion of the front side vertical extension portion 224B. The front side bolt 233 extends vertically through the base portion of the front side vertical extension portion 224B, the upper face portion of the right fender portion 216R and the horizontal portion of the front side stay 232 and also is fastened to a nut 234 fixedly welded to the horizontal portion of the front side stay 232.

A bolt (rear side bolt) 233 corresponding to the rear side stay 232 is inserted from above into the base portion of the rear side vertical extension portion 224C. The rear side bolt 233 extends vertically through the base portion of the rear side vertical extension portion 224C, the upper face portion of the right fender portion 216R and the horizontal portion of the rear side stay 232 and also is fastened to a nut 234 fixedly welded to the horizontal portion of the rear side stay 232.

### [Relay Cover in Third non-claimed Example]

As shown in Fig. 22 and Fig. 24, inside the left fender portion 216L, there is provided an electric system relay 235. A cover 236 that covers the relay 235 is provided in order to protect the relay 235 from muddy water, etc. that intrudes from the left rear wheel 203B. The relay 235 is attached to the cover 236. This cover 236 is constituted of a box-like member that is opened to the front side and the upper side. The cover 236 includes a bottom plate 236A, left and right side plates 236B and a rear plate 236C. The cover 236 is bolt-fixed to a stay 237 for reinforcing a stay 229. Bolts 238 for fixing the cover 236 are inserted from the left side relative to the left side plate 236B. The cover 236 can be detached from the machine body left side together with the relay 235.

### [Opening/Closing Arrangement of Bottom Plate of Machine Body Side Duct in Third non-claimed Example]

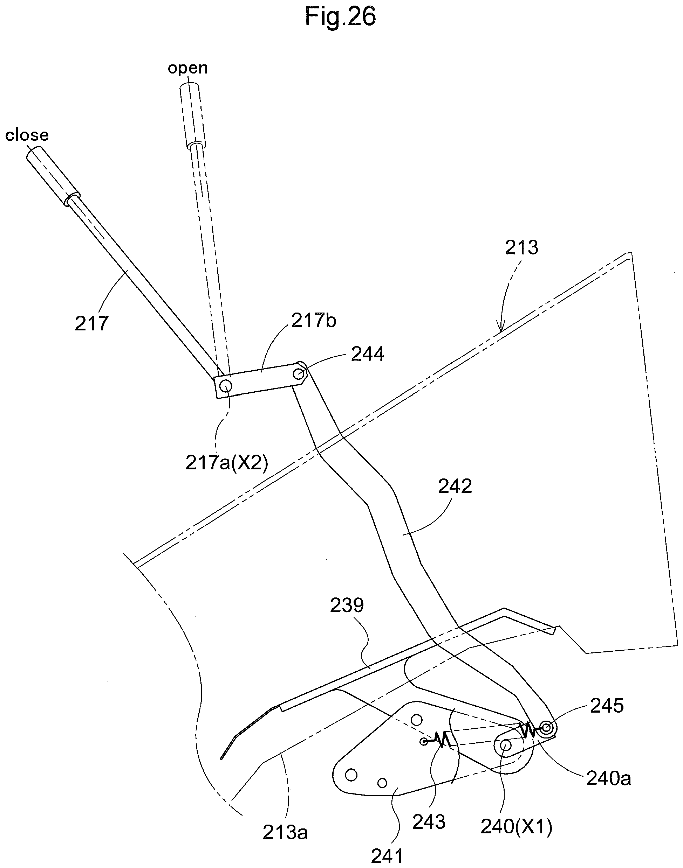

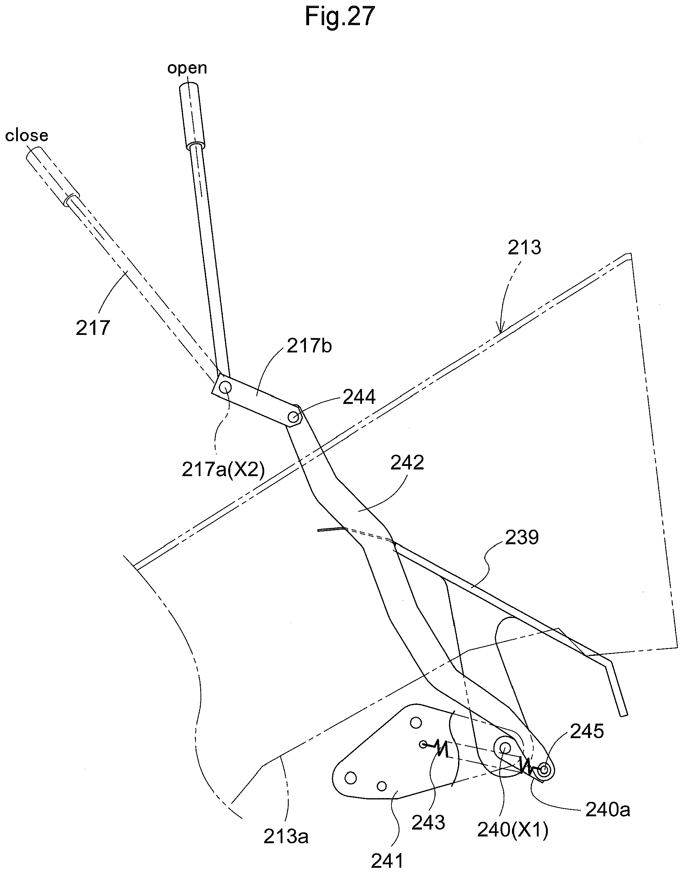

As shown in Fig. 26 and Fig. 27, the machine body side duct 213 includes a bottom plate 239 for opening/closing its bottom portion opening 213a. The bottom plate 239 is pivotable about a pivot axis X1 between a closing position (see Fig. 26) for closing the bottom portion opening 213a and an opening position (see Fig. 27) for opening the bottom portion opening 213a. The pivot axis X1 is a pivot axis that extends along the machine body left/right direction. The bottom plate 239 is supported to left and right support plates 241 via a support shaft 240 to be pivotable about the pivot axis X1.

The duct lever 217 is configured to be pivotable about a pivot axis X2. The pivot axis X2 is a pivot axis that extends along the machine body left/right direction. The duct lever 217 is provided with a rod portion 217a that extends along the pivot axis X2.

A link 242 is provided for operably coupling the duct lever 217 with the bottom plate 239. This link 242 is provided along the left side face of the machine body side duct 213. The rod portion 217a includes an arm 217b to which one end portion of the link 242 is connected. The one end portion of the link 242 and the arm 217b are connected to each other via a pin 244. The support shaft 240 is provided with an arm 240a to which the other end portion of the link 242 is connected. The arm 240a and the other end portion of the link 242 are connected to each other via a pin 245.

A spring 243 is provided for pivotally urging the bottom plate 239 about the pivot axis X1. The spring 243 is configured to be switchable between a state for pivotally urging the bottom plate 239 toward the closing position side about the pivot axis X1 (this state will be referred to as "closing position side pivotal urging state" hereinafter, see Fig. 26) and a state for pivotally urging the bottom plate 239 toward the opening position side about the pivot axis X1(this state will be referred to as "opening position side pivotal urging state" hereinafter, see Fig. 27). Namely, the spring 243 is configured to be switchable by transcending the pivot axis X1 between the closing position side pivotal urging state and the opening position side pivotal urging state. Further, the spring 243 is provided between the left support plate 241 and the pin 245.

As shown in Fig. 26, when the bottom plate 239 is located at the closing position, the spring 243 is under the closing position side pivotal urging state. In this case, the spring 243 is located upwardly of the pivot axis X1.

Then, as shown in Fig. 27, when the duct lever 217 is pivoted to the opening position, in operative association with this pivoting of the duct lever 217 via the link 242, the bottom plate 239 is pivoted to the opening position about the pivot axis X1. In correspondence therewith, the spring 243 will now be located downwardly of the pivot axis X1. With this, the spring 243 is set under the opening position side pivotal urging state.

### [Further Embodiments of Third non-claimed Example]

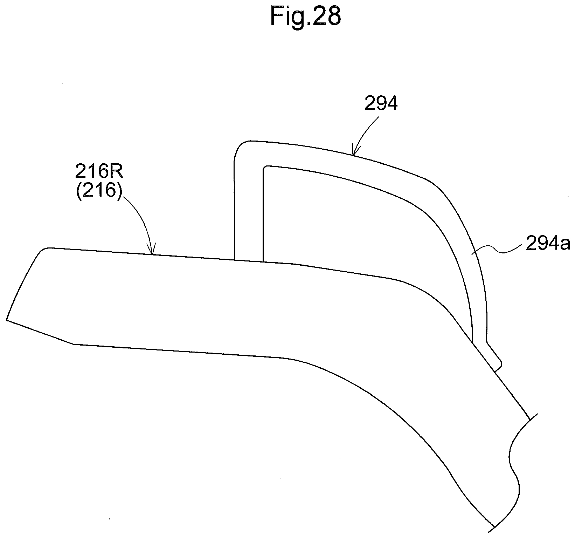

(1) As shown in Fig. 28, instead of the handrail 224, a different handrail 294 may be employed. Fig. 28 shows an example in which the handrail 294 is employed instead of the right handrail 224. In the handrail 294, there is formed a portion 294a which is formed along the curved shape of the upper face portion of the right fender portion 216R. Incidentally, such handrail 294 may be employed in place of the left handrail 224 also.
(2) In the foregoing example, the "traveling device" relating to the present invention is provided as the wheeled traveling device 203. However, the "traveling device" may be provided as a crawler type traveling device.
(3) In the foregoing example, the upper end P2 of the handrail 224 is located upwardly of the lower end P3 of the seat portion 214A and downwardly of the upper end P4 of the seat portion 214A. However, the upper end P2 of the handrail 224 may be located upwardly of the upper end P4 of the seat portion 214A and downwardly of the lower end of the armrest 214C. Or, the upper end P2 of the handrail 224 may be located at a height position downwardly of the lower end P3 of the seat portion 214A.
(4) In the foregoing example, the front/rear range of the left handrail 224 is overlapped with the front/rear range of the left lever guide 225. However, the front/rear range of the left handrail 224 may not be overlapped with the front/rear range of the left lever guide 225.
(5) In the foregoing example, the front/rear range of the right handrail 224 is overlapped with the front/rear range of the right lever guide 226. However, the front/rear range of the right handrail 224 may not be overlapped with the front/rear range of the right lever guide 226.
(6) In the foregoing example, the left handrail 224 is disposed on the laterally outer side (left side) of the left lever guide 225. However, the left handrail 224 may be disposed on the laterally inner side (right side) of the left lever guide 225.
(7) In the foregoing example, the right handrail 224 is disposed on the laterally outer side (right side) of the right lever guide 226. However, the right handrail 224 may be disposed on the laterally inner side (left side) of the right lever guide 226.
(8) In the foregoing example, the right handrail 224 is disposed on more front side than the oil inlet 219a of the fuel tank 219. However, the right handrail 224 may be disposed on more rear side than the oil inlet 219a of the fuel tank 219.
(9) In the foregoing example, inside the left fender portion 216L, the left support frame 227L is provided. However, the left support frame 227L may be provided outside the left fender portion 216L.
(10) In the foregoing example, inside the right fender portion 216R, the right support frame 227R is provided. However, the right support frame 227R may be provided outside the right fender portion 216R.
(11) In the foregoing example, the portion of the fuel tank 219 along the right support frame 227R is shaped to be concave to the inner side of the fuel tank 219. However, the portion of the fuel tank 219 along the right support frame 227R may not be shaped to be concave to the inner side of the fuel tank 219.

### INDUSTRIAL APPLICABILITY

The present invention is applicable not only to a riding grass mower machine, but also to a tractor mounting a work device (utility implement) mounted at a rear portion of the machine body.

The present invention is applicable not only to a riding type grass mower machine having a vehicle body which is steered by steering of front wheels, but also to a riding type grass mower machine in which front wheels are configured as caster wheels and its vehicle body is steered by a speed difference between left and right rear wheels.

### DESCRIPTION OF SIGNS

### [First Embodiment]

- 2:: machine body frame
- 3F:: front wheel
- 20:: bracket
- 21:: balance weight
- 21a:: body portion
- 21b:: outer side portion
- 22:: frame portion
- 23:: bolt (fixing tool)
- T:: turning locus of front wheel
- W1:: lateral width W1 between left end of left balance weight and right end of right balance weight
- W2:: lateral width of machine body frame

### [Second non-claimed Example]

- 106:: grass mower device
- 114:: balance weight attaching portion
- 114B:: weight storage portion
- 114C:: handle storage portion
- 119:: jacking device
- 119A:: jacking body
- 119B:: operational handle
- 120:: balance weight
- 134:: first posture maintaining mechanism
- 141:: second posture maintaining mechanism

### [Third non-claimed Example]

- 203:: traveling device
- 214:: driver's seat
- 214A:: seat portion
- 216:: fender
- 216a:: opening
- 217:: duct lever (operational lever)
- 218:: work lever (operational lever)
- 219:: fuel tank
- 219a:: oil inlet
- 224:: handrail
- 225:: left lever guide
- 226:: right lever guide
- 227L:: left support frame
- 227R:: right support frame
- 224:: handrail
- P1:: rear end of seat portion
- P2:: upper end of handrail
- P3:: lower end of seat portion

## Claims

1. A work vehicle comprising:
a machine body frame (2) having a front end portion;
a bracket (20) provided at the front end portion of the machine body frame (2); and
a balance weight (21) detachably attached the bracket (20);
wherein the balance weight (21) is attached to the bracket (20) without protruding more forwardly than the bracket (20);
the bracket (20) includes a frame portion (22) in the form of a framework as seen in a plan view; and
a main body portion (21a) of the balance weight (21) is inserted within the framework,
**characterized in that**
the balance weight (21) has an outer side portion (21b) which is located on a lateral side of and outside of the frame portion (22) when the main body portion (21a) is inserted within the framework; and
the balance weight (21) is fixed to the bracket (20) by a fixing tool (23) which extends through the outer side portion (21b) laterally.

2. The work vehicle of claim 1, wherein:
there are provided a pair of left and right balance weights (21); and
the left and right balance weights (21) are constituted of an identical member respectively.

3. The work vehicle of claim 2, wherein a lateral width (W1) between a left end of the left balance weight (21) and a right end of the right balance weight (21) is set longer than a lateral width (W2) of the machine body frame (2).

4. The work vehicle of any one of claims 1-to 3, wherein:
there are provided a pair of left and right steerable front wheels (3F); and
the respective balance weight (21) is attached to the bracket (20) without protruding to more outer side of the machine body than a turning locus (T) of the corresponding front wheel (3F).

## Patentansprüche

1. Arbeitsfahrzeug, umfassend:
einen Maschinenkörperrahmen (2),
eine Halterung (20), die an dem vorderen Endabschnitt des Maschinenkörperrahmens (2) vorgesehen ist, und
ein Ausgleichsgewicht (21), das abnehmbar an der Halterung (20) befestigt ist,
wobei das Ausgleichsgewicht (21) an der Halterung (20) befestigt ist, ohne weiter nach vorne hervorzustehen als die Halterung (20),
die Halterung (20) einen Rahmenabschnitt (22) in Form eines Rahmenwerks umfasst, wie in der Draufsicht gesehen, und
ein Hauptkörperabschnitt (21a) des Ausgleichsgewichts (21) in das Rahmenwerk eingesetzt ist,
**dadurch gekennzeichnet, dass**
das Ausgleichsgewicht (21) einen äußeren Seitenabschnitt (21b) aufweist, der sich auf einer seitlichen Seite und außerhalb des Rahmenabschnitts (22) befindet, wenn der Hauptkörperabschnitt (21a) in das Rahmenwerk eingesetzt ist, und
das Ausgleichsgewicht (21) durch ein Befestigungswerkzeug (23) an der Halterung (20) befestigt ist, das sich seitlich durch den äußeren Seitenabschnitt (21b) erstreckt.

2. Arbeitsfahrzeug nach Anspruch 1, wobei:
ein Paar linke und rechte Ausgleichsgewichte (21) vorgesehen sind, und
die linken und rechten Ausgleichsgewichte (21) jeweils aus einem identischen Element bestehen.

3. Arbeitsfahrzeug nach Anspruch 2, wobei eine seitliche Breite (W1) zwischen einem linken Ende des linken Ausgleichsgewichts (21) und einem rechten Ende des rechten Ausgleichsgewichts (21) länger eingestellt ist als eine seitliche Breite (W2) des Maschinenkörperrahmens (2).

4. Arbeitsfahrzeug nach einem der Ansprüche 1 bis 3, wobei:
ein Paar linke und rechte lenkbare Vorderräder (3F) vorgesehen sind, und
das jeweilige Ausgleichsgewicht (21) an der Halterung (20) befestigt ist, ohne auf der Außenseite des Maschinenkörpers weiter hervorzustehen als eine Drehkurve (T) des entsprechenden Vorderrads (3F).

## Revendications

1. Engin de travail comprenant :
un châssis de machine (2) ayant une partie d'extrémité avant ;
une console (20) prévue au niveau de la partie d'extrémité avant du châssis de machine (2) ; et
une masse d'équilibrage (21) fixée, de manière détachable, à la console (20) ;
dans lequel la masse d'équilibrage (21) est fixée à la console (20) sans faire davantage saillie vers l'avant que la console (20) ;
la console (20) comprend une partie de bâti (22) se présentant sous la forme d'une ossature, comme observé sur une vue en plan ; et
une partie de corps principal (21a) de la masse d'équilibrage (21) est insérée dans l'ossature,
**caractérisé en ce que** :
la masse d'équilibrage (21) a une partie latérale externe (21b) qui est positionnée sur un côté latéral et à l'extérieur de la partie de bâti (22), lorsque la partie de corps principal (21a) est insérée dans l'ossature ; et
la masse d'équilibrage (21) est fixée à la console (20) par un outil de fixation (23) qui s'étend latéralement à travers la partie latérale externe (21b).

2. Engin de travail selon la revendication 1, dans lequel :
on prévoit une paire de masses d'équilibrage gauche et droite (21) ; et
les masses d'équilibrage gauche et droite (21) sont constituées par un élément respectivement identique.

3. Engin de travail selon la revendication 2, dans lequel une largeur latérale (W1) entre une extrémité gauche de la masse d'équilibrage gauche (21) et une extrémité droite de la masse d'équilibrage droite (21) est plus longue qu'une largeur latérale (W2) du châssis de machine (2).

4. Engin de travail selon l'une quelconque des revendications 1 à 3, dans lequel :
on prévoit une paire de roues avant dirigeables gauche et droite (3F) ; et
la masse d'équilibrage (21) respective est fixée à la console (20) sans faire davantage saillie vers le côté externe de la carrosserie de machine qu'un lieu de virage (T) de la roue avant (3F) correspondante.
